# EUROPEAN PATENT APPLICATION

(11) **EP 4 826 923 A2**
(43) Date of publication of application: **21.10.2026**
(21) Application number: 26173424.8
(22) Date of filing: 07.12.2021
(51) Int. Cl.: H01R 43/28

(54) **SYSTEMS AND METHODS FOR AUTOMATIC ELECTRICAL WIRING**

(30) Priority: 07.12.2020 US 202063122030 P; 23.03.2021 US 202163164645 P; 23.03.2021 US 202163164660 P
(62) Document number(s) of the earlier application(s) in accordance with Art. 76 EPC: 21902865.1 / 4 255 697
(71) Applicant: Polygon T.R Ltd., 4486200 Tzur-Yigal (IL)
(72) Inventor: EINAV, Omer, 4287500 Kfar-Monas (IL); SHABANOV, Doron, 4486200 Tzur-Yigal (IL); EISENBERG, Rom, 4424206 Kfar-Saba (IL); MANDELBAUM, Orya, 9430928 Jerusalem (IL); EFRAT, Yotam, 4529209 Hod Hasharon (IL)
(74) Representative: IPrime Rentsch Kaelin AG

(57) **Abstract**

An aspect of some embodiments of the invention relates to an automatic system for electrical wiring comprising: a wire preparation module; at least one wiring arm module comprising a wiring-end effector at its distal end for manipulating wires to be inserted in an object in need of electrical wiring; and circuitry, which coordinates the operation of said wire preparation module and said at least one wiring arm module using at least one parameter related to said need of electrical wiring.

## Description

### RELATED APPLICATION/S

This application claims the benefit of priority of U.S. Provisional Patent Application No. 63/122,030 filed on 7 December 2020, U.S. Provisional Patent Application No. 63/164,645 filed on 23 March 2021 and U.S. Provisional Patent Application No. 63/164,660 filed on 23 March 2021 the contents of which are incorporated herein by reference in their entirety.

This application is also related to co-filed PCT Patent Application entitled "SYSTEMS AND METHODS FOR AUTOMATIC ELECTRICAL WIRING WITH ENDEFFECTOR" (Attorney Docket No. 90346), the contents of which are incorporated herein by reference in their entirety.

### FIELD AND BACKGROUND OF THE INVENTION

The present invention, in some embodiments thereof, relates to systems and methods for automatic electrical wiring and, more particularly, but not exclusively, to systems and methods for automatic electrical wiring for electrical cabinets.

Preparation and wiring of electrical cabinets comprises a complicated process of wire architecture design and hard wiring labor. The present invention discloses systems and methods for automatic electrical wiring which potentially improves the generation and manufacture of electrical cabinets.

### SUMMARY OF THE INVENTION

Following is a non-exclusive list including some examples of embodiments of the invention. The invention also includes embodiments which include fewer than all the features in an example and embodiments using features from multiple examples, also if not expressly listed below.

Example 1. An automatic system for electrical wiring comprising:
a. at least one wiring arm module comprising a wiring-end effector at its distal end for holding and manipulating wires;
b. at least one sensor located in said wiring-end effector;
c. circuitry, which:
   i. receives a command to perform an activity of electrical wiring by using said at least one wiring arm module comprising said wiring-end effector; and
   ii. coordinates the operation of said at least one wiring arm module and said wiring-end effector taking into consideration a sensed property in relation to said wire caused by said activity.

Example 2. The automatic system for electrical wiring according to example 1, wherein said at least one parameter is one or more of: a state of said wire, a deformation of said wire, a position of said wire, a force applied on said wire, a torque applied on said wire, a type of connector in said object.

Example 3. The automatic system for electrical wiring according to example 1, wherein said wiring-end effector comprises a wire holding element.

Example 4. The automatic system for electrical wiring according to example 1, wherein said wire holding element comprises a wire pinching element comprising two extensions.

Example 5. The automatic system for electrical wiring according to example 4, wherein said two extensions are two elongated extensions.

Example 6. The automatic system for electrical wiring according to example 4, wherein said two extensions are brought together by an electrical mechanism.

Example 7. The automatic system for electrical wiring according to example 4, wherein said two extensions are brought together by a pneumatic mechanism.

Example 8. The automatic system for electrical wiring according to example 1, wherein said manipulating comprises inserting said wire in a connector of an object in need of electrical wiring.

Example 9. The automatic system for electrical wiring according to example 8, wherein said wire holding element comprises a motor for movement along an entry axis of said connector in said object.

Example 10. The automatic system for electrical wiring according to example 1, wherein said wire holding element comprises one or more sensors for monitoring forces applied by said wire pinching element.

Example 11. The automatic system for electrical wiring according to example 1, wherein said wiring-end effector comprises one or more sensors for monitoring forces applied on said wire holding element.

Example 12. The automatic system for electrical wiring according to example 1, wherein said wiring-end effector comprises a wire locking element.

Example 13. The automatic system for electrical wiring according to example 1, wherein said wire locking element comprises one or more motors to move said wire locking element in one or more directions for interacting with a locking mechanism in said connector.

Example 14. The automatic system for electrical wiring according to example 1, wherein said wire locking element comprises one or more torque sensors for monitoring the locking actuation of said wire locking element on a locking mechanism in said connector.

Example 15. The automatic system for electrical wiring according to example 14, wherein said wire locking element is configured to actuate said a locking mechanism in said connector according to predetermined torque parameters monitored by said one or more torque sensors.

Example 16. The automatic system for electrical wiring according to example 1, wherein said circuitry receives said command to perform an activity of electrical wiring from at least one designing console.

Example 17. The automatic system for electrical wiring according to example 16, wherein said at least one designing console is one or more of an electronic device, a computer, a tablet, a cellphone and a server.

Example 18. The automatic system for electrical wiring according to example 16, wherein said at least one designing console comprises dedicated software for the generation of an electrical schematic plan.

Example 19. The automatic system for electrical wiring according to example 16, wherein said at least one designing console is in communication with at least one server.

Example 20. The automatic system for electrical wiring according to example 16, wherein said at least one designing console comprises dedicated software for the generation of a mechanical drawing.

Example 21. The automatic system for electrical wiring according to example 16, wherein said at least one designing console comprises dedicated software for the generation of a merge of an electrical schematic plan with a mechanical drawing.

Example 22. The automatic system for electrical wiring according to example 16, wherein said at least one designing console comprises dedicated software for the generation of a sequence routing of wires according to one or more of a electrical schematic plan and a mechanical drawing.

Example 23. The automatic system for electrical wiring according to example 1, further comprising a monitoring system.

Example 24. The automatic system for electrical wiring according to example 23, wherein said monitoring system comprises one or more cameras.

Example 25. The automatic system for electrical wiring according to example 23, wherein said monitoring system comprises one or more sensors.

Example 26. The automatic system for electrical wiring according to example 23, wherein said monitoring system comprises one or more force sensors.

Example 27. The automatic system for electrical wiring according to example 23, wherein said monitoring system comprises one or more torque sensors.

Example 28. The automatic system for electrical wiring according to example 23, wherein said monitoring system comprises one or more current sensors.

Example 29. The automatic system for electrical wiring according to example 1, wherein said at least one wiring arm module comprises a plurality of articulations.

Example 30. The automatic system for electrical wiring according to example 1, wherein said at least one wiring arm module is mounted on a rail.

Example 31. The automatic system for electrical wiring according to example 1, wherein said at least one wiring arm module is configured to approach said object in need of electrical wiring from the side.

Example 32. The automatic system for electrical wiring according to example 1, wherein said at least one wiring arm module is configured to approach said object in need of electrical wiring from above.

Example 33. The automatic system for electrical wiring according to example 1, wherein said at least one wiring arm module is configured to approach said object in need of electrical wiring along the terminal wire port angle.

Example 34. The automatic system for electrical wiring according to example 1, wherein two wiring arm modules collaborate with each other in said manipulating of said wires.

Example 35. The automatic system for electrical wiring according to example 34, wherein during said manipulating said two wiring arm modules are distanced between each other so as to provide tension on said wire.

Example 36. The automatic system for electrical wiring according to example 35, wherein parts of said wire that are not held between said two wiring arm modules are not provided with tension.

Example 37. The automatic system for electrical wiring according to example 34, wherein during said manipulating one of said two wiring arm modules holds firmly said wire while the other wiring arm module slides on the wire to a desired location.

Example 38. The automatic system for electrical wiring according to example 35, wherein said wire that is held without tension is from about 1% to about 50% of the total length of said wire.

Example 39. The automatic system for electrical wiring according to example 34, wherein the system is configured to monitor a motion of each of said two wiring arm modules.

Example 40. The automatic system for electrical wiring according to example 39, wherein said motion is one or more of: motion of one of said two wiring arm modules with respect to the other, motion of each said two wiring arm modules with respect to said connector, motion of each said two wiring arm modules with respect to said object, distance between said two wiring arm modules and tension of said wire being held between said two wiring arm modules.

Example 41. The automatic system for electrical wiring according to example 40, wherein said system is configured to modify said motion when a certain predetermined value is sensed regarding said motion.

Example 42. The automatic system for electrical wiring according to example 1, further comprising a wire preparation module configured for preparing wires to be inserted in an object in need of electrical wiring.

Example 43. The automatic system for electrical wiring according to example 42, wherein said wire preparation module provides ready-to-be-used wires to said at least one wiring arm module.

Example 44. The automatic system for electrical wiring according to example 1, further comprising said object in need of electrical wiring.

Example 45. The automatic system for electrical wiring according to example 40, wherein said object is an electrical cabinet.

Example 46. The automatic system for electrical wiring according to example 42, wherein said electrical cabinet comprises one or more smart components configured to assist in said electrical wiring.

Example 47. The automatic system for electrical wiring according to example 43, wherein said one or more smart components are one or more of smart wires, smart ducts, latches, holders and markers.

Example 48. A method of automatic connecting at least one wire to at least one connector in a component, comprising:
a. automatically grabbing a distal end of at least one wire by means of at least one wire holder;
b. automatically moving said at least one wire holder to bring said distal end of said at least one wire close to said at least one connector;
c. automatically inserting said distal end of said at least one wire in said at least one connector;
d. automatically assessing if said at least one wire is correctly connected to said at least one connector;
wherein said method further comprises sensing at least one parameter of said at least one wire in relation to said at least one connector during said automatically inserting and said automatically assessing.

Example 49. The method according to example 55, wherein said at least one parameter is one or more of a state of said at least one wire, a deformation of said at least one wire, a position of said at least one wire, a force applied on said at least one wire, a torque applied on said at least one wire.

Example 50. The method according to example 55, wherein said inserting is performed by moving said at least one wire holder.

Example 51. The method according to example 55, wherein said at least one wire is a harness wire comprising a plurality of distal ends.

Example 52. The method according to example 55, wherein said inserting is performed by moving a robotic arm on which said at least one wire holder is mounted.

Example 53. The method according to example 55, wherein said sensing comprises sensing a force applied to said at least one wire when coming in contact with said at least one connector in said component.

Example 54. The method according to example 55, further comprising automatically locking said at least one wire in said at least one connector by actuating at least one locking mechanism.

Example 55. The method according to example 55, wherein said automatically assessing comprises pulling back said at least one wire from said at least one connector.

Example 56. The method according to example 62, wherein said assessing comprises sensing if said at least one wire resists said pulling back.

Example 57. The method according to example 55, wherein two wiring arm modules collaborate with each other in performing said connecting of said at least one wire.

Example 58. The method according to example 57, wherein during said connecting said two wiring arm modules are distanced between each other so as to provide tension on said at least one wire.

Example 59. The method according to example 58, wherein parts of said wire that are not held between said two wiring arm modules are not provided with tension.

Example 60. The method according to example 58, wherein during said connecting one of said two wiring arm modules holds firmly said wire while the other wiring arm module slides on the wire to a desired location.

Example 61. The method according to example 59, wherein said wire that is held without tension is from about 1% to about 50% of the total length of said wire.

Example 62. The method according to example 57, further comprising monitoring a motion of each of said two wiring arm modules.

Example 63. The method according to example 57, wherein said motion is one or more of: motion of one of said two wiring arm modules with respect to the other, motion of each said two wiring arm modules with respect to said connector, motion of each said two wiring arm modules with respect to said object, distance between said two wiring arm modules and tension of said wire being held between said two wiring arm modules.

Example 64. The method wiring according to example 63, further comprising modifying said motion when a certain predetermined value is sensed regarding said motion.

Example 65. An automatic system for electrical wiring comprising:
a. a wire delivery unit;
b. at least one wiring arm module comprising a wiring-end effector at its distal end for manipulating wires received by said wire delivery unit to be inserted in a connector in an object in need of electrical wiring;
c. circuitry, which coordinates the operation of said wire delivery unit and said at least one wiring arm module using at least one parameter related to said need of electrical wiring.

Example 66. The automatic system for electrical wiring according to example 65, wherein said wiring delivery unit is a wire preparation module for preparing wires to be inserted in said connector in said object in need of electrical wiring.

Example 67. The automatic system for electrical wiring according to example 65, wherein said wiring delivery unit comprises premade wires to be inserted in said connector in said object in need of electrical wiring.

Example 68. A wiring end effector, comprising:
a. a wire holding element comprising two extensions; and
b. at least one sensor configured to monitor forces applied to at least one wire being held by said wire holding element.

Example 69. The wiring end effector according to example 68, wherein said two extensions are two elongated extensions.

Example 70. The wiring end effector according to example 68, wherein said at least one sensor is located in said wire holding element.

Example 71. The wiring end effector according to example 68, wherein said at least one sensor is located in said two extensions.

Example 72. The wire end effector according to example 68, further comprising a wire locking element comprising a connector locking mechanism actuator.

Example 73. A method of automatic wiring an object in need of electrical wiring, comprising:
a. receiving an electrical wiring plan of said object in need of electrical wiring and a sequence routing of wires according to said plan;
b. preparing a plurality of wires;
c. delivering said prepared wires to an automatic wiring arm module;
d. automatically wiring said prepared wires in said object in need of electrical wiring according to said generated sequence routing of wires.

Example 74. A method of automatic wiring an object in need of electrical wiring, comprising:
a. planning an electrical wiring of said object in need of electrical wiring;
b. automatically generating a sequence routing of wires according to said planning;
c. preparing a plurality of wires;
d. delivering said prepared wires to an automatic wiring arm module;
e. automatically wiring said prepared wires in said object in need of electrical wiring according to said generated sequence routing of wires.

Example 75. An automatic system for electrical wiring comprising:
a. at least one wiring arm module comprising a wiring-end effector at its distal end for manipulating wires to be inserted in a hole of a connector in a component;
b. circuitry, which coordinates the operation of said at least one wiring arm module and said wiring-end effector using at least one parameter related to said connector;
c. one or more sensors configured to detect a parameter related to a wire while being inserting in said hole of said connector by said wiring-end effector.

Example 76. A wiring end effector, comprising:
a. a wire holding element comprising two extensions; and
b. a locking device comprising an electrical terminal connector locking mechanism actuator.

Example 77. The wiring end effector according to example 76, further comprising at least one sensor configured to monitor forces applied to at least one wire being held by said wire holding element.

Example 78. A wiring end effector, comprising:
a. a wire holding element comprising two extensions;
b. a locking device comprising an electrical terminal connector locking mechanism actuator;
c. a wire feeder configured to feed at least one wire to said wire holding element.

Example 79. The wiring end effector according to example 78, further comprising at least one sensor configured to monitor forces applied to at least one wire being held by said wire holding element.

Example 80. A wiring end effector, comprising:
a. a wire holding element comprising two extensions; and
b. a camera configured to monitor the actions of said wire holding element.

Example 81. The wiring end effector according to example 80, further comprising a locking device comprising a connector locking mechanism actuator.

Example 82. The wiring end effector according to example 80, further comprising a wire feeder configured to feed at least one wire to said wire holding element.

Example 83. The wiring end effector according to example 80, further comprising at least one sensor configured to monitor forces applied to at least one wire being held by said wire holding element.

Example 84. A wiring end effector, comprising:
a. a wire holding element comprising two extensions; and
b. a wire cutter configured to cut a distal of a wire being held by said wire holding element.

Example 85. The wiring end effector according to example 84, further comprising a camera configured to monitor the actions of said wire holding element.

Example 86. The wiring end effector according to example 84, further comprising a locking device comprising a connector locking mechanism actuator.

Example 87. The wiring end effector according to example 84, further comprising a wire feeder configured to feed at least one wire to said wire holding element.

Example 88. The wiring end effector according to example 84, further comprising at least one sensor configured to monitor forces applied to at least one wire being held by said wire holding element.

Example 89. A method of planning an automatic wiring of at least one object in need for electrical wiring in a designing console of an automatic system for electrical wiring, the method comprising:
a. receiving from at least one user rules for electrical schematics and/or mechanical drawings;
b. receiving an electrical schematics and/or the mechanical drawing in said designing console;
c. performing an automatic check of said designs according to said rules;
d. merging said electrical schematics with said mechanical drawings, thereby generating a master wiring design;
e. preparing a robotic wiring plan.

Example 90. The method according to example 89, wherein said rules are rules related to one or more standards, special requirements by a client, technical limitations and personal rules inserted by said one or more users.

Example 91. The method according to example 89, wherein different designs are provided by different users and independently inserted into said designing console.

Example 92. The method according to example 89, wherein said designs are made elsewhere and manually inserted into the designing console.

Example 93. The method according to example 89, further comprising automatically approving said designs after said performing.

Example 94. The method according to example 89, further comprising performing a second check on said master wiring design according to said rules.

Example 95. The method according to example 89, wherein said robotic wiring plan comprises one or more of: a length and number of ducts, components to be inserted in said object, a series of routing paths for one or more wires, a sequence of placing one or more wires on routing paths.

Example 96. The method according to example 89, further comprising wiring said at least one object according to said robotic wiring plan.

Example 97. The method according to example 89, further comprising performing a simulation of said robotic wiring plan before said wiring said at least one object according to said robotic wiring plan.

Example 98. A method of placing a wire along a path by two robotic arms, comprising:
a. holding a first end of said wire with a first robotic arm;
b. placing said first end of said wire at a first location along said path;
c. sliding a second robotic arm along said wire, towards said first location, thereby placing said wire along said path.

Example 99. A method of automatic wiring a lightning unit by connecting at least one wire to at least one connector, comprising:
a. automatically grabbing a distal end of a wire by means of a wire holder;
b. automatically moving said wire holder to bring said distal end of said wire close to said connector;
c. automatically inserting said distal end of said wire in said connector;
d. automatically assessing if said at least one wire is correctly connected to said at least one connector;
wherein said method further comprises sensing at least one parameter of said wire in relation to said connector during said automatically inserting and said automatically assessing.

Example 100. The method according to example 99, wherein said at least one parameter is one or more of a state of said wire, a deformation of said wire, a position of said wire, a force applied on said wire, a torque applied on said wire.

Example 101. The method according to example 99, wherein said inserting is performed by moving said wire holder.

Example 102. The method according to example 99, wherein said inserting is performed by moving said connector.

Example 103. The method according to example 99, wherein said inserting is performed by moving a robotic arm on which said wire holder is mounted.

Example 104. The method according to example 99, wherein said sensing comprises sensing a force applied to said at least one wire when coming in contact with said at least one connector.

Example 105. The method according to example 99, further comprising automatically locking said at least one wire in said at least one connector by actuating at least one locking mechanism.

Example 106. The method according to example 99, wherein said automatically assessing comprises pulling back said at least one wire from said at least one connector.

Example 107. The method according to example 106, wherein said assessing comprises sensing if said at least one wire resists said pulling back.

Following is an additional non-exclusive list including some examples of embodiments of the invention. The invention also includes embodiments which include fewer than all the features in an example and embodiments using features from multiple examples, also if not expressly listed below.

Example 1001. An automatic system for electrical wiring comprising:
a. at least one wiring arm module comprising a wiring-end effector at its distal end for manipulating wires to be inserted in an object in need of electrical wiring;
b. circuitry, which coordinates the operation of said wire preparation module and said at least one wiring arm module using at least one parameter related to said need of electrical wiring.

Example 1002. The automatic system for electrical wiring according to example 1001, further comprising a wire preparation module.

Example 1003. The automatic system for electrical wiring according to example 1001 or example 1002, wherein said wiring preparation module is configured for preparing wires to be inserted in an object in need of electrical wiring.

Example 1004. The automatic system for electrical wiring according to any one of examples 1001-1003, wherein said wire preparation module comprises a plurality of wire stocks.

Example 1005. The automatic system for electrical wiring according to any one of examples 1001-1004, wherein said wire preparation module comprises one or more wire manipulators.

Example 1006. The automatic system for electrical wiring according to any one of examples 1001-1005, wherein said one or more wire manipulators mounted on a rail for moving between parts of said wire preparation module.

Example 1007. The automatic system for electrical wiring according to any one of examples 1001100-6, wherein said wire preparation module comprises at least one wire stripper module.

Example 1008. The automatic system for electrical wiring according to any one of examples 1001-1007, wherein said wire preparation module comprises a plurality of wire-end connector mounting modules.

Example 1009. The automatic system for electrical wiring according to any one of examples 1001-1008, wherein said wire preparation module comprises a wire cutter.

Example 1010. The automatic system for electrical wiring according to any one of examples 1001-1009, wherein said wire preparation module comprises a labeling module.

Example 1011. The automatic system for electrical wiring according to any one of examples 1001-1010, wherein said at least one wiring arm module comprises a plurality of articulations.

Example 1012. The automatic system for electrical wiring according to any one of examples 1001-1011, wherein said at least one wiring arm module is mounted on a rail.

Example 1013. The automatic system for electrical wiring according to any one of examples 1001-1012, wherein said at least one wiring arm module is configured to approach said object in need of electrical wiring from the side.

Example 1014. The automatic system for electrical wiring according to any one of examples 1001-1013, wherein said at least one wiring arm module is configured to approach said object in need of electrical wiring from above.

Example 1015. The automatic system for electrical wiring according to any one of examples 1001-1014, wherein said wiring-end effector comprises a wire holding element.

Example 1016. The automatic system for electrical wiring according to any one of examples 1001-1015, wherein said wire holding element comprises a wire pinching element comprising two elongated extensions.

Example 1017. The automatic system for electrical wiring according to any one of examples 1001-1016, wherein said which two elongated extensions are brought together by an electrical mechanism.

Example 1018. The automatic system for electrical wiring according to any one of examples 1001-1017, wherein said wire holding element comprises a motor for horizontal movement of said wire holding element.

Example 1019. The automatic system for electrical wiring according to any one of examples 1-18, wherein said wire holding element comprises one or more sensors for monitoring forces applied by said wire pinching element.

Example 1020. The automatic system for electrical wiring according to any one of examples 1001-1019, wherein said wiring-end effector comprises a wire locking element.

Example 1021. The automatic system for electrical wiring according to any one of examples 1001-1020, wherein said wire locking element comprises a terminal block actuator.

Example 1022. The automatic system for electrical wiring according to any one of examples 1001-1021, wherein said wire locking element comprises a motor to move vertically said actuator for interacting with a terminal block.

Example 1023. The automatic system for electrical wiring according to any one of examples 1001-1022, wherein said wire preparation module provides ready-to-be-used wires to said at least one wiring arm module.

Example 1024. The automatic system for electrical wiring according to any one of examples 1001-1023, wherein said wire preparation module provides ready-to-be-used multi-end harness wires.

Example 1025. The automatic system for electrical wiring according to any one of examples 1001-1024, wherein said circuitry receives said at least one parameter related to said need of electrical wiring from at least one designing console.

Example 1026. The automatic system for electrical wiring according to any one of examples 1001-1025, wherein said at least one designing console is one or more of an electronic device, a computer, a tablet, a cellphone and a server.

Example 1027. The automatic system for electrical wiring according to any one of examples 1001-1026, wherein said at least one designing console is in communication with at least one server.

Example 1028. The automatic system for electrical wiring according to any one of examples 1001-1027, wherein said at least one designing console comprises dedicated software for the generation of an electrical schematic plan.

Example 1029. The automatic system for electrical wiring according to any one of examples 1001-1028, wherein said at least one designing console comprises dedicated software for the generation of a mechanical drawing.

Example 1030. The automatic system for electrical wiring according to any one of examples 1001-1029, wherein said at least one designing console comprises dedicated software for the generation of a merge of an electrical schematic plan with a mechanical drawing.

Example 1031. The automatic system for electrical wiring according to any one of examples 1001-1030, wherein said at least one designing console comprises dedicated software for the generation of a bill of materials.

Example 1032. The automatic system for electrical wiring according to any one of examples 1001-1031, wherein said at least one designing console comprises dedicated software for the generation of a sequence routing of wires according to one or more of said electrical schematic plan and said mechanical drawing.

Example 1033. The automatic system for electrical wiring according to any one of examples 1001-1032, further comprising a monitoring system.

Example 1034. The automatic system for electrical wiring according to any one of examples 1001-1033, wherein said monitoring system comprises one or more cameras.

Example 1035. The automatic system for electrical wiring according to any one of examples 1001-1034, wherein said monitoring system comprises one or more sensors.

Example 1036. The automatic system for electrical wiring according to any one of examples 1001-1035, wherein said monitoring system comprises one or more force sensors.

Example 1037. The automatic system for electrical wiring according to any one of examples 1001-1036, wherein said monitoring system comprises one or more torque sensors.

Example 1038. The automatic system for electrical wiring according to any one of examples 1001-1037, wherein said monitoring system comprises one or more current sensors.

Example 1039. The automatic system for electrical wiring according to any one of examples 1001-1038, further comprising said object in need of electrical wiring.

Example 1040. An automatic system for electrical wiring comprising:
a. a wire delivery unit;
b. at least one wiring arm module comprising a wiring-end effector at its distal end for manipulating wires to be inserted in an object in need of electrical wiring;
c. circuitry, which coordinates the operation of said wire preparation module and said at least one wiring arm module using at least one parameter related to said need of electrical wiring.

Example 1041. The automatic system for electrical wiring according to example 1040, wherein said wiring delivery unit is a wire preparation module for preparing wires to be inserted in an object in need of electrical wiring.

Example 1042. The automatic system for electrical wiring according to example 1040, wherein said wiring delivery unit comprises premade wires to be inserted in said object in need of electrical wiring.

Example 1043. A wiring end effector, comprising:
a. a wire holding element comprising two elongated extensions; and
b. a wire locking element comprising a terminal block actuator.

Example 1044. A method of preparing an electrical wire by an automated wire preparation machine comprising a plurality of wire stocks, one or more wire manipulators, at least one wire stripper module, a plurality of wire-end connector mounting modules, at least one labeling module and a wire cutter, the method comprising:
a. picking a first end of a wire from said plurality of wire stocks by a first wire manipulator from said one or more wire manipulators;
b. moving said first end of said wire into said at least one stripper module thereby stripping a cover of said first end of said wire and exposing a wire core;
c. releasing a length of said wire according to a need of length of a prepared wire;
d. picking said wire at a location of said needed length said by a second wire manipulator from said one or more wire manipulators;
e. moving said wire into said wire cutter, thereby generating a second end of said wire;
f. moving said second end of said wire into said at least one stripper module thereby stripping a cover of said second end of said wire and exposing a wire core.

Example 1045. The method according to example 1044, further comprising moving said stripped first end of said wire into one of said plurality of wire-end connector mounting modules, thereby mounting a wire-end connector over said stripped first end of said wire.

Example 1046. The method according to example 1044 or example 1045, further comprising moving said stripped second end of said wire into one of said plurality of wire-end connector mounting modules, thereby mounting a wire-end connector over said stripped second end of said wire.

Example 1047. The method according to any one of examples 1044-1046, further comprising moving said first end of said wire into said labeling module for labeling said wire.

Example 1048. The method according to any one of examples 1044-1047, further comprising moving said second end of said wire into said labeling module for labeling said wire.

Example 1049. A method of automatic wiring an object in need of electrical wiring, comprising:
a. receiving an electrical wiring plan of said object in need of electrical wiring and a sequence routing of wires according to said plan;
b. preparing a plurality of wires;
c. delivering said prepared wires to an automatic wiring arm module;
d. automatically wiring said prepared wires in said object in need of electrical wiring according to said generated sequence routing of wires.

Example 1050. A method of automatic wiring an object in need of electrical wiring, comprising:
a. planning an electrical wiring of said object in need of electrical wiring;
b. automatically generating a sequence routing of wires according to said planning;
c. preparing a plurality of wires;
d. delivering said prepared wires to an automatic wiring arm module;
e. automatically wiring said prepared wires in said object in need of electrical wiring according to said generated sequence routing of wires.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

As will be appreciated by one skilled in the art, some embodiments of the present invention may be embodied as a system, method or computer program product. Accordingly, some embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, some embodiments of the present invention may take the form of a computer program product embodied in one or more computer readable medium(s) having computer readable program code embodied thereon. Implementation of the method and/or system of some embodiments of the invention can involve performing and/or completing selected tasks manually, automatically, or a combination thereof. Moreover, according to actual instrumentation and equipment of some embodiments of the method and/or system of the invention, several selected tasks could be implemented by hardware, by software or by firmware and/or by a combination thereof, e.g., using an operating system.

For example, hardware for performing selected tasks according to some embodiments of the invention could be implemented as a chip or a circuit. As software, selected tasks according to some embodiments of the invention could be implemented as a plurality of software instructions being executed by a computer using any suitable operating system. In an exemplary embodiment of the invention, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

Any combination of one or more computer readable medium(s) may be utilized for some embodiments of the invention. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium and/or data used thereby may be transmitted using any appropriate medium, including but not limited to wireless, wireline, optical fiber cable, RF, etc., or any suitable combination of the foregoing.

Computer program code for carrying out operations for some embodiments of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Some embodiments of the present invention may be described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Some of the methods described herein are generally designed only for use by a computer, and may not be feasible or practical for performing purely manually, by a human expert. A human expert who wanted to manually perform similar tasks, such as the insertion of wires into sockets and/or designing the architecture of an electrical cabinet, might be expected to use completely different methods, e.g., making use of expert knowledge and/or the pattern recognition capabilities of the human brain, which would be vastly more efficient than manually going through the steps of the methods described herein.

### BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Figure 1A is a schematic representation of an exemplary automated wiring system, according to some embodiments of the invention;
Figure 1B is a flowchart of an exemplary method of managing electrical schematics with mechanical drawings in and by the designing console, according to some embodiments of the invention;
Figure 2 is a schematic representation of an exemplary automated wiring unit/system, according to some embodiments of the invention;
Figure 3 is a schematic illustration of an exemplary automated wiring unit/system, according to some embodiments of the invention;
Figure 4 is a schematic representation of an exemplary wire preparation module, according to some embodiments of the invention;
Figures 5A-B are schematic illustrations of an exemplary wire manipulator, according to some embodiments of the invention;
Figures 6A-C are flowcharts of exemplary methods of wire preparation, according to some embodiments of the invention;
Figure 7A is an exemplary wiring arm module comprising a plurality of articulations, according to some embodiments of the invention;
Figures 7B1-7B5 are schematic representation of an exemplary typical cycle of actions performed by a human when wiring a wire into a connector;
Figures 8A-B are schematic representations of exemplary wiring arm modules, according to some embodiments of the invention;
Figure 9A is a schematic representation of an exemplary wiring-end effector module, according to some embodiments of the invention;
Figure 9B is a schematic representation of the parts of the wire holding element, according to some embodiments of the invention;
Figure 9C1 is a schematic representation of the sensors located on the elongated extensions, according to some embodiments of the invention;

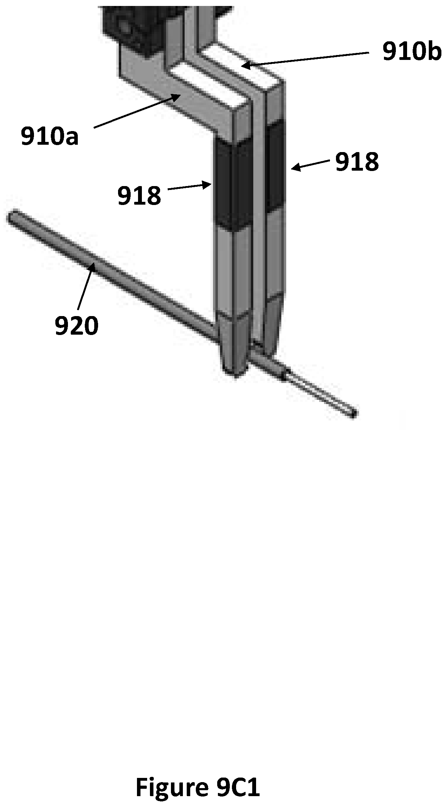

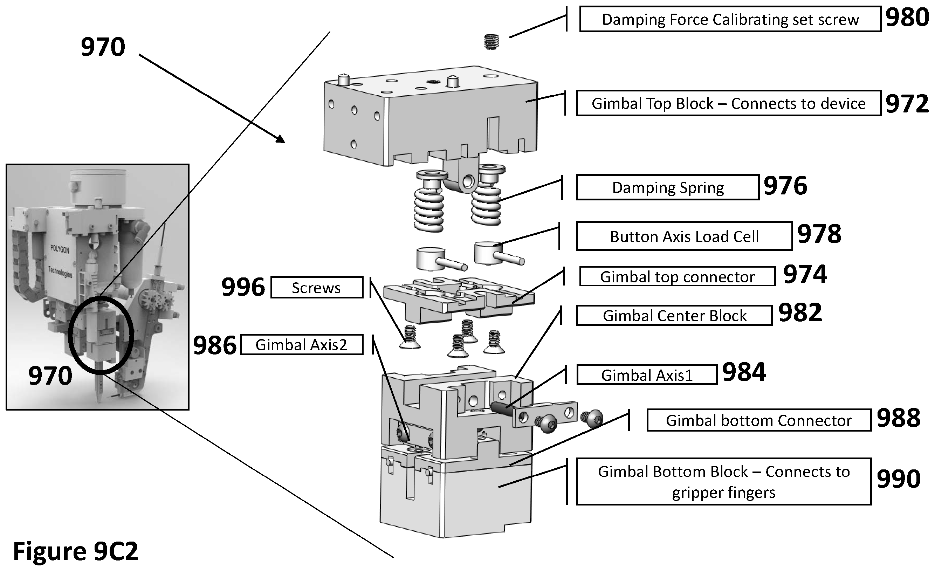

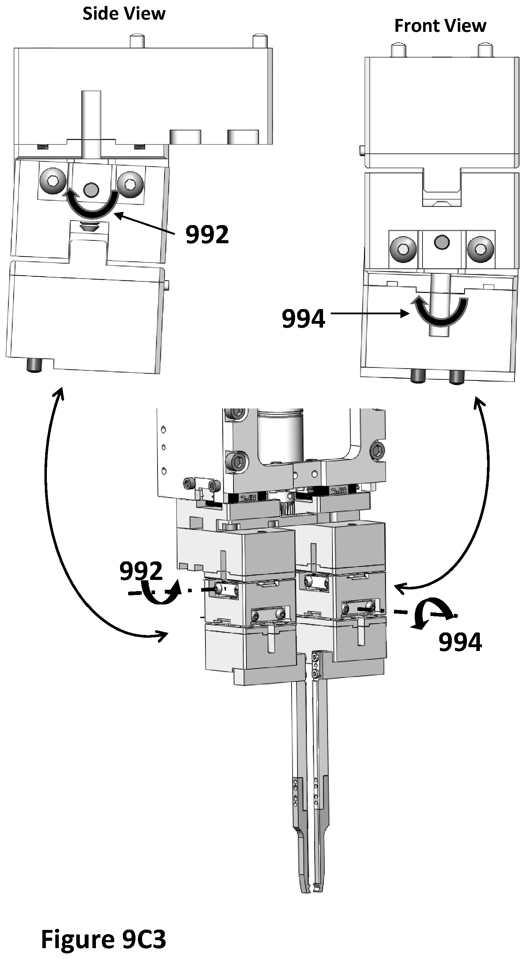

Figures 9C2-9C3 are schematic representations of exemplary gimbal blocks to which the extensions are connected, according to some embodiments of the invention;

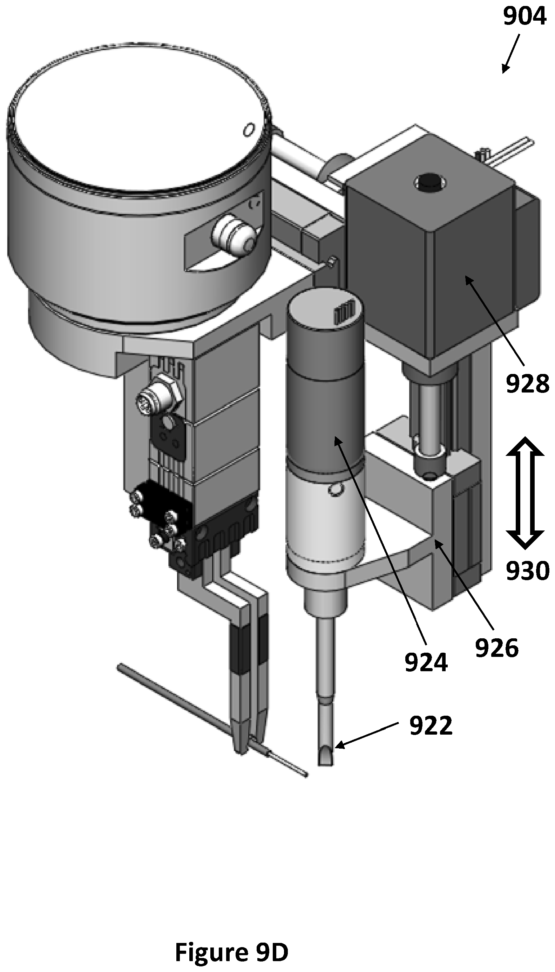

Figure 9D is a schematic representation of an exemplary wire locking element, according to some embodiments of the invention;

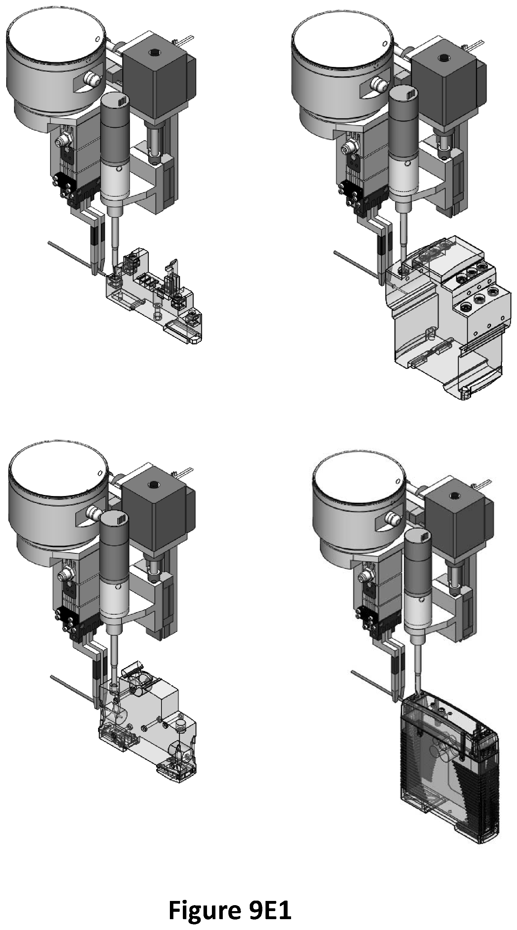

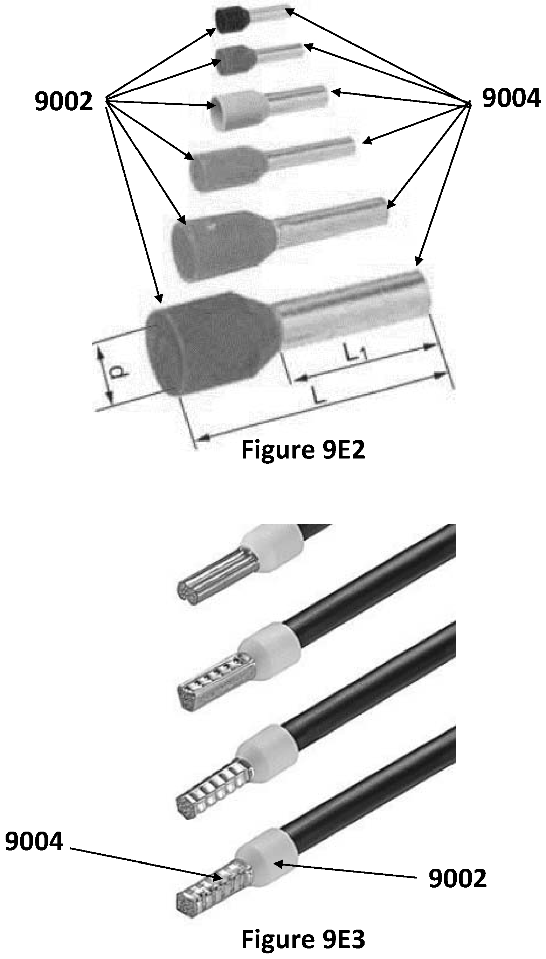

Figure 9E1 is a schematically representations of a plurality of exemplary interactions of wiring-end effector modules with different types of terminal blocks, according to some embodiments of the invention;
Figures 9E2-9E3 are schematic representations of exemplary ferrules, according to some embodiments of the invention;

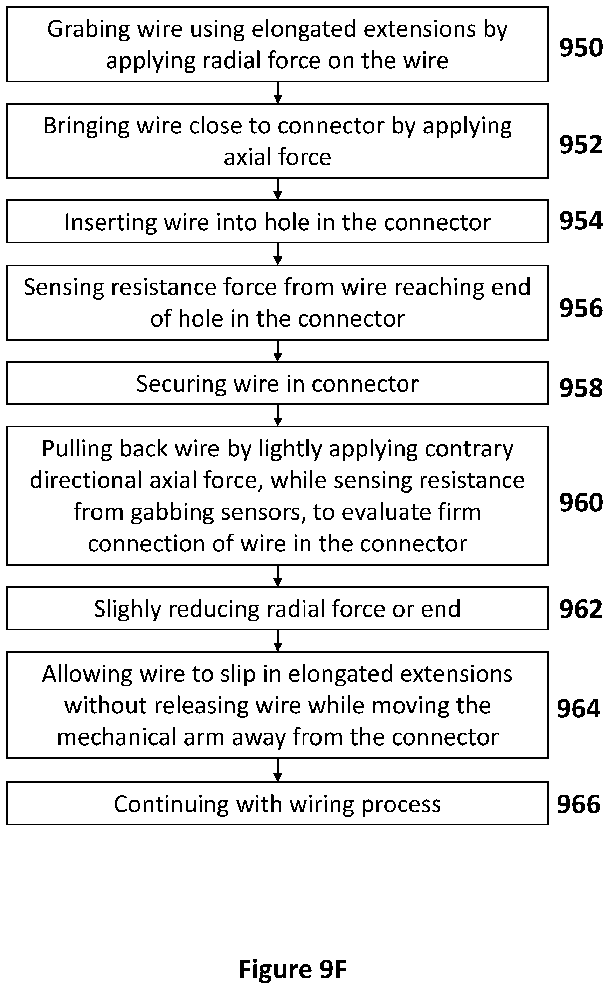

Figure 9F is a flowchart of an exemplary method of wiring by an exemplary wiring-end effector module, according to some embodiments of the invention;

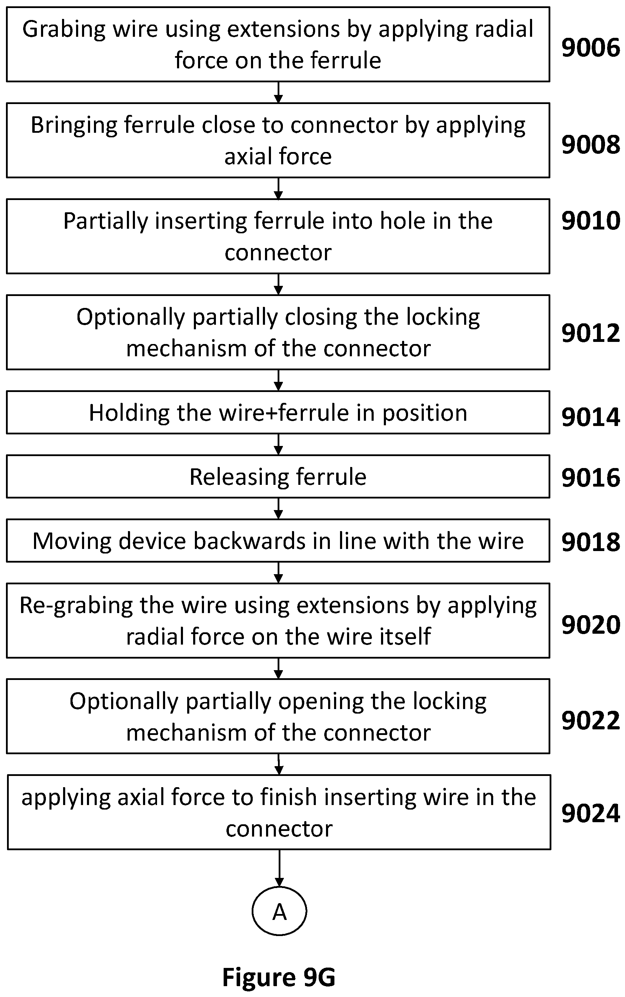

Figures 9G-9H are flowcharts of an exemplary method of wiring by an exemplary wiring-end effector module, according to some embodiments of the invention;

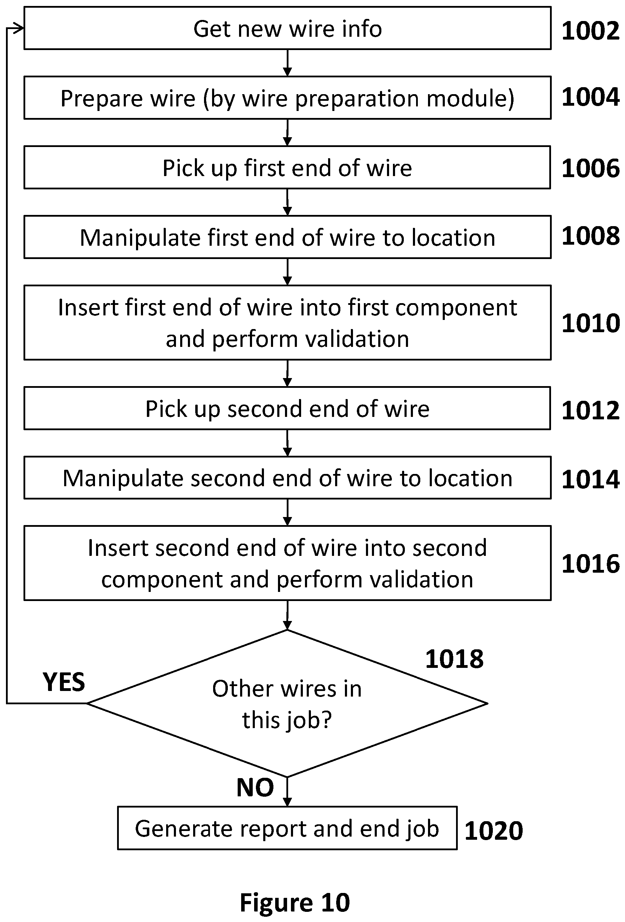

Figure 10 is a flowchart of an exemplary method of wiring by the wiring arms module, according to some embodiments of the invention;

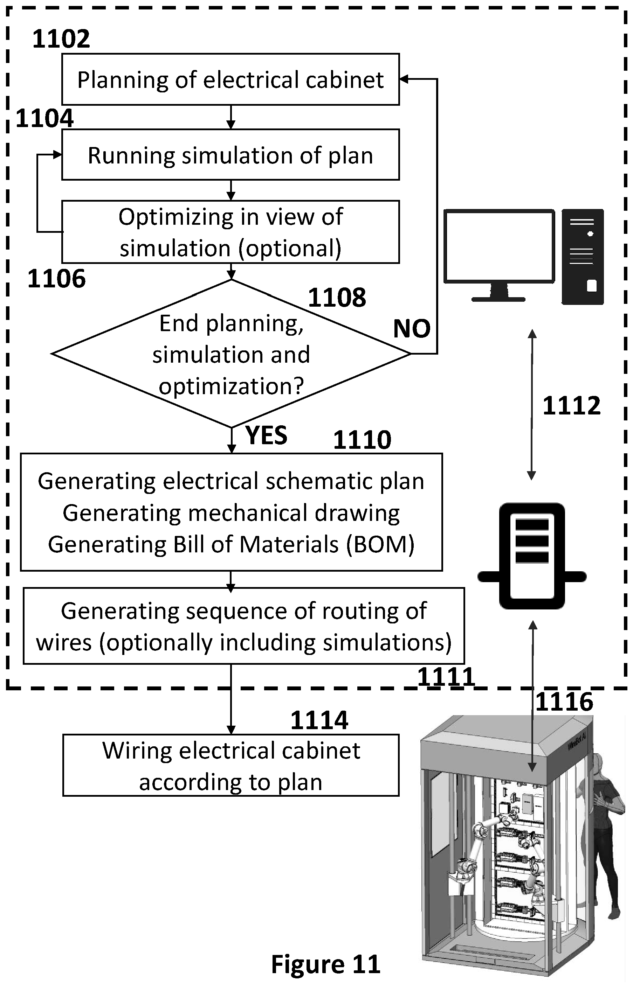

Figure 11 is a schematic representation of an exemplary data flow and operation of an automated wiring system, according to some embodiments of the invention;

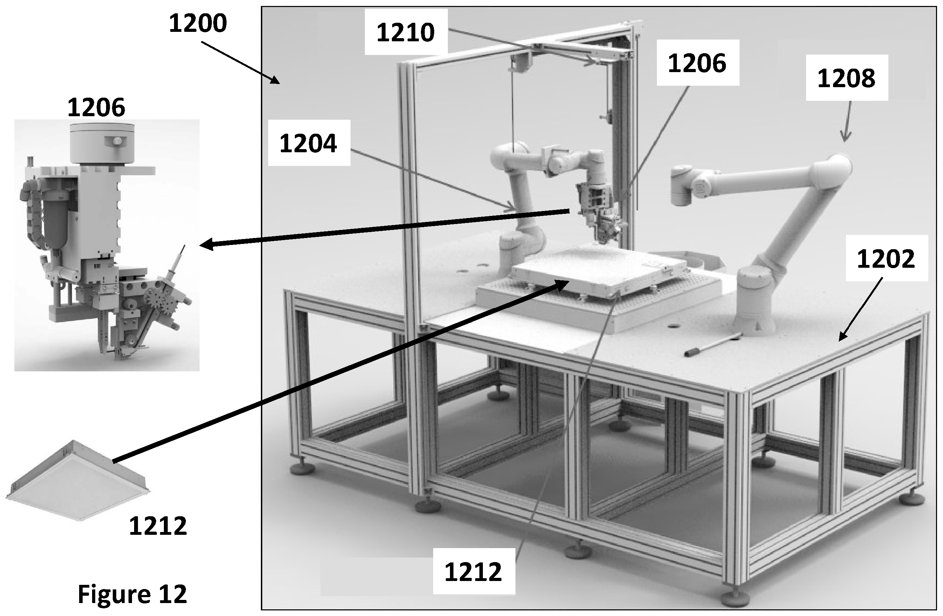

Figure 12 is a schematic representation of an automated electrical wiring for lightning units, according to some embodiments of the invention;

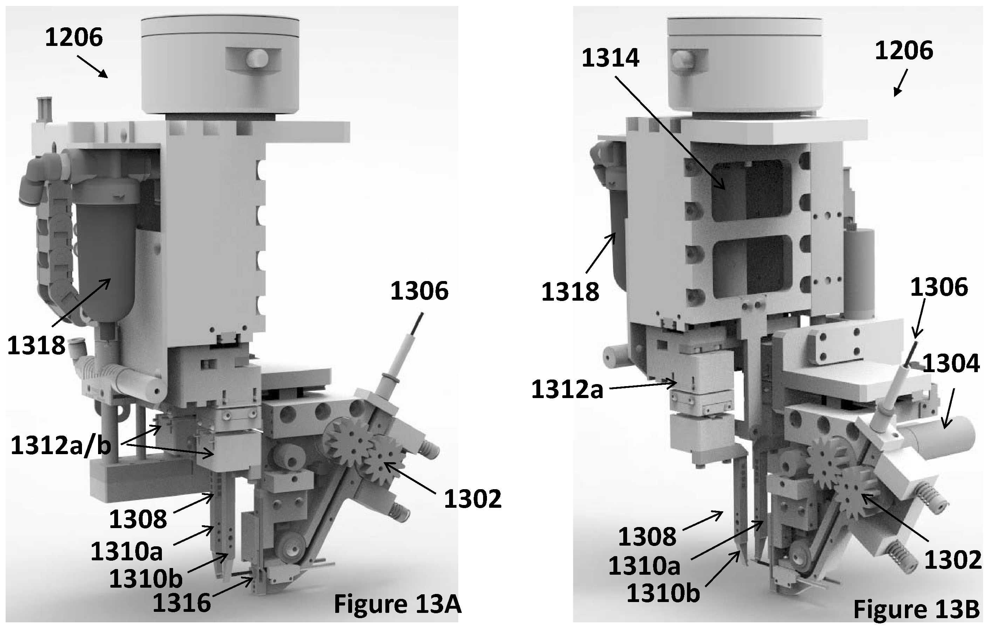

Figures 13A-B are schematic representations of wire end-effector of the automated electrical wiring for lightning units, according to some embodiments of the invention;

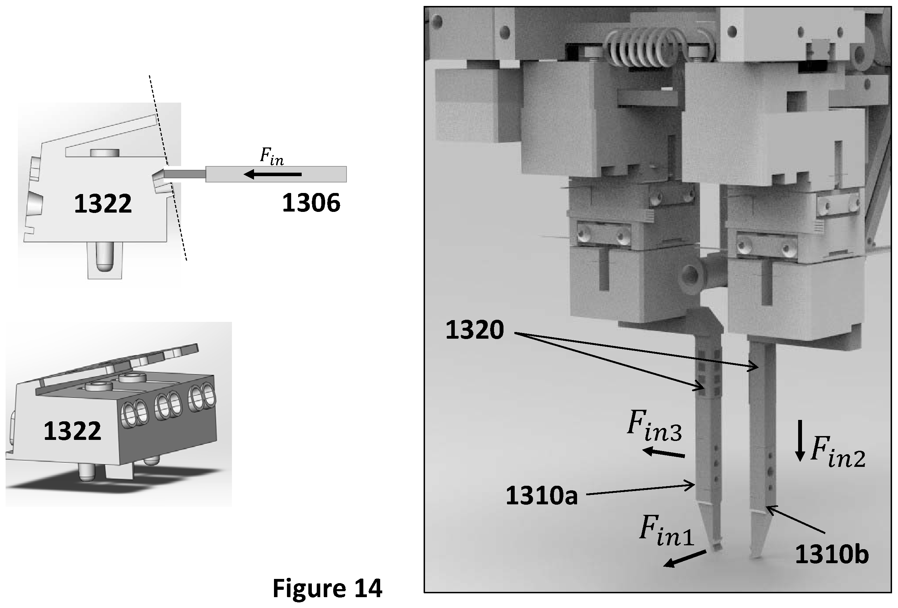

Figure 14 is a schematic representation of exemplary forces used for the insertion of the wire into the wire terminal, according to some embodiments of the invention;

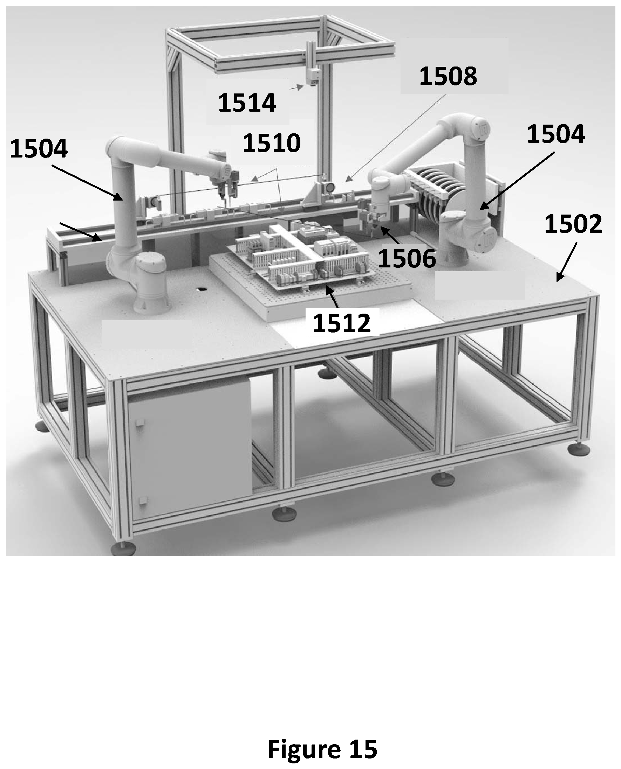

Figure 15 is a schematic representation of an exemplary horizontal automated wiring system with a dedicated wire preparation module, according to some embodiments of the invention;

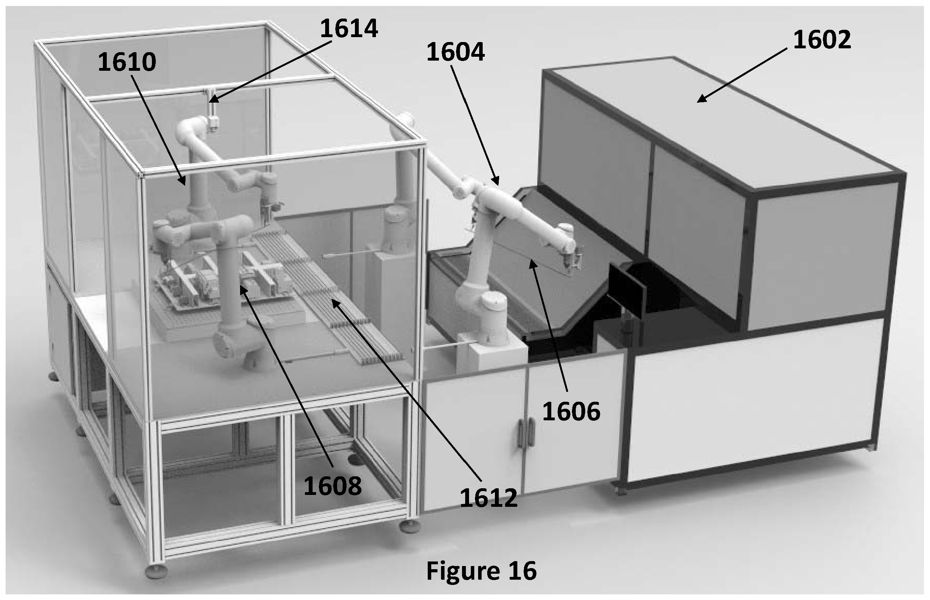

Figure 16 is a schematic representation of another exemplary horizontal automated wiring system with a dedicated wire preparation module, according to some embodiments of the invention;

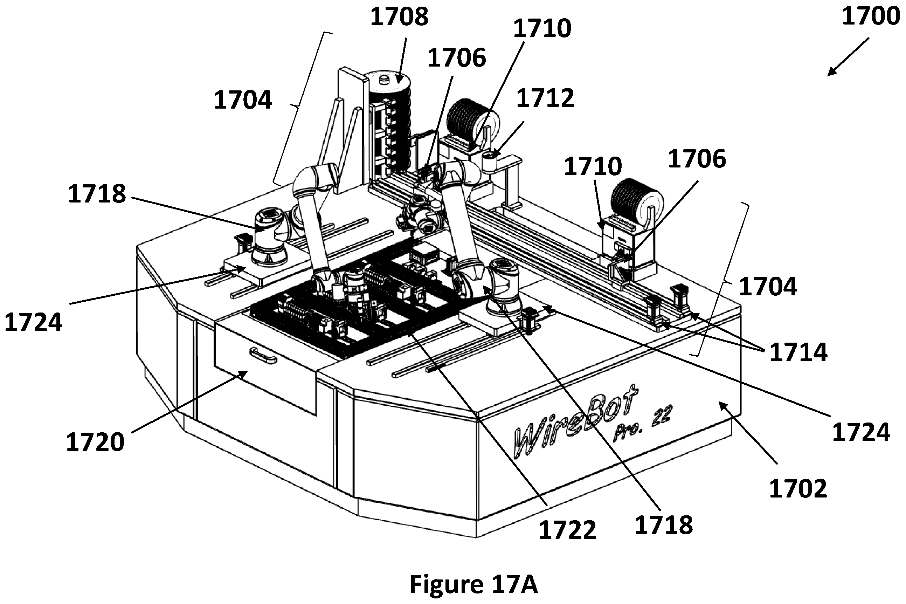

Figures 17A-D are schematic representations of an exemplary horizontal automated wiring system, according to some embodiments of the invention;

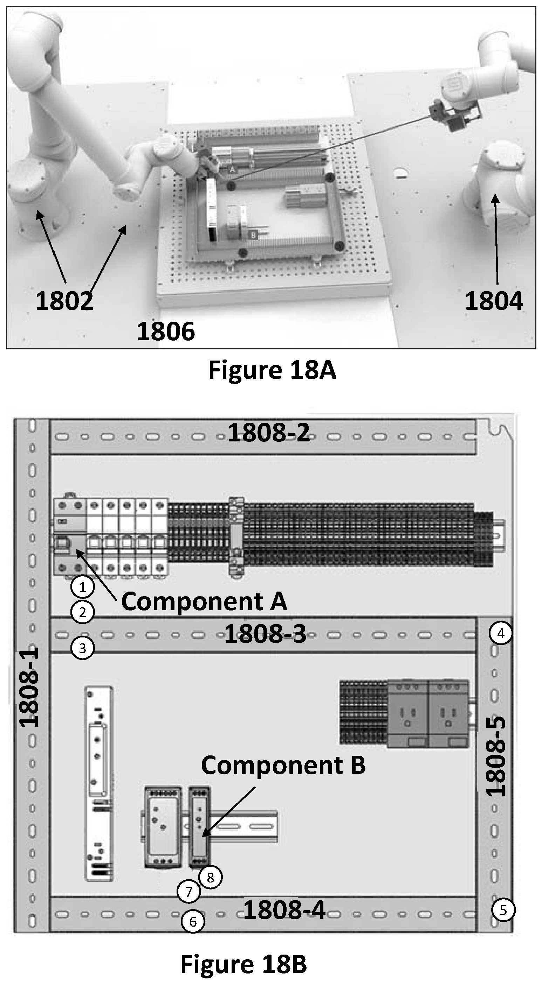

Figures 18A-B are schematic illustrations of a wiring process by two automated mechanical arms, and a wire preparation horizontal module according to some embodiments of the invention;

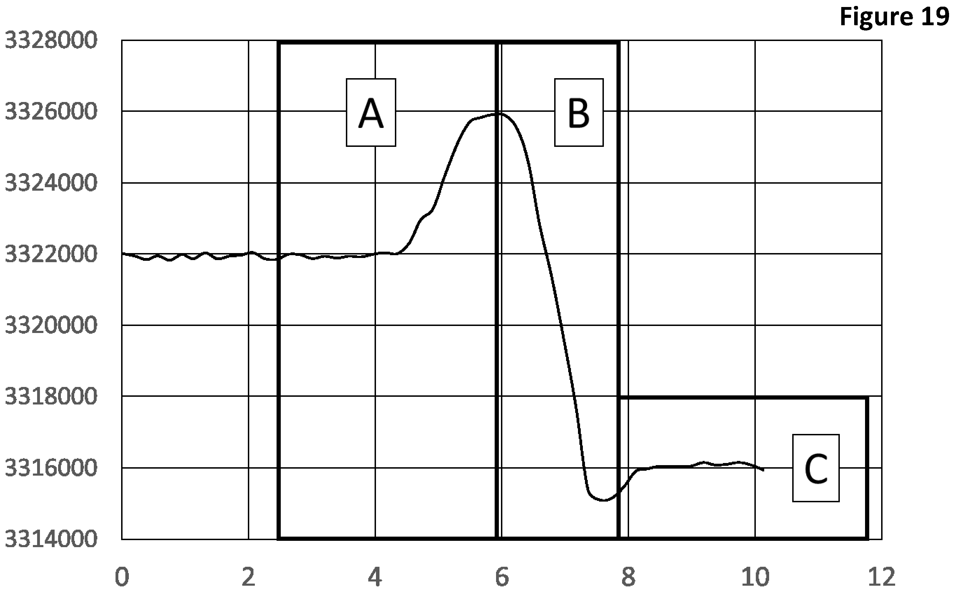

Figure 19 is a graph describing the exemplary phases of the insertion of a wire into an electrical terminal connector as identified by the sensors in the gripper, according to some embodiments of the invention;

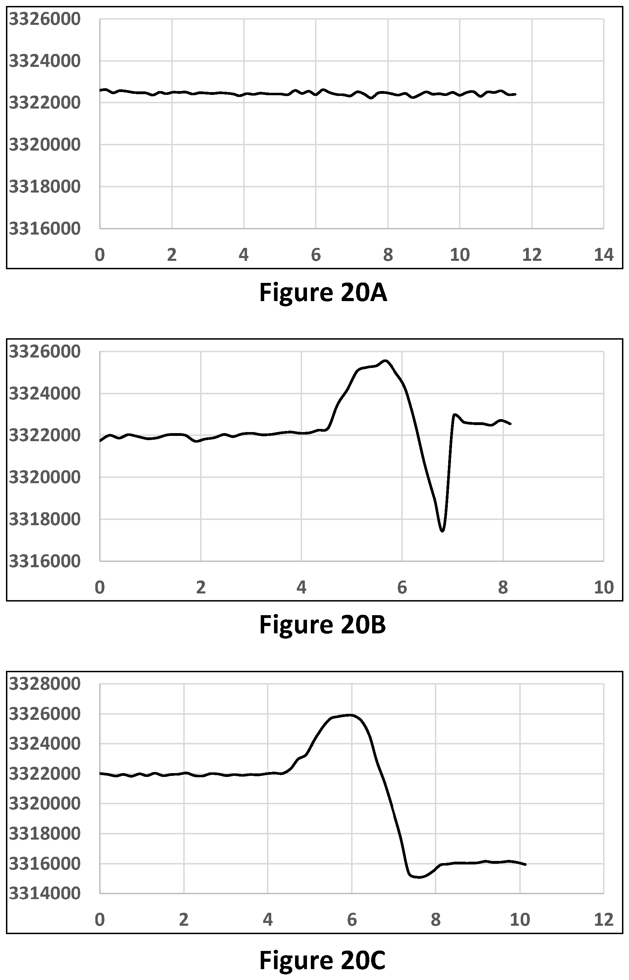

Figures 20A-C are three different examples of sensed forces by the gripper in three different scenarios, according to some embodiments of the invention; and

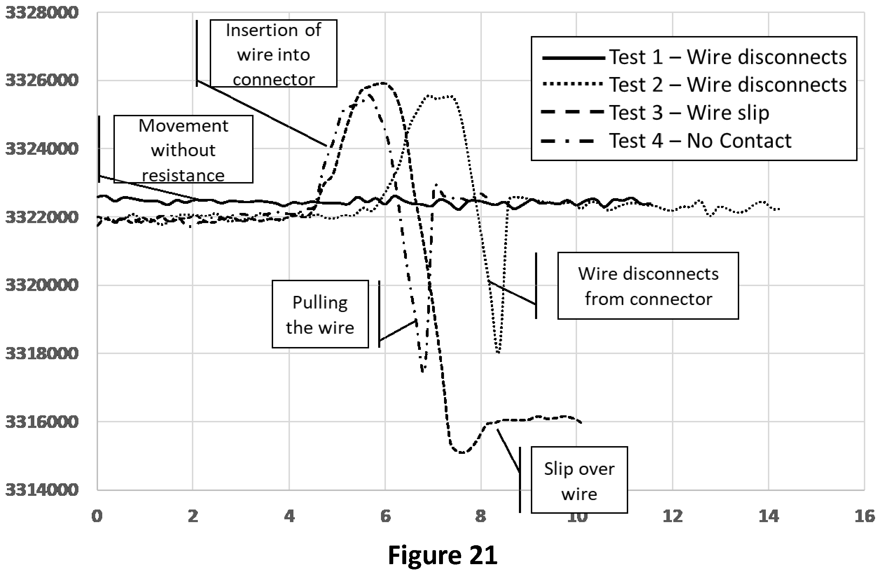

Figure 21 illustrates a plurality of test experiments for the characterization of exemplary scenarios, according to some embodiments of the invention.

### DESCRIPTION OF SPECIFIC EMBODIMENTS OF THE INVENTION

The present invention, in some embodiments thereof, relates to systems and methods for automatic electrical wiring and, more particularly, but not exclusively, to systems and methods for automatic electrical wiring for electrical cabinets.

### Overview

An aspect of some embodiments of the invention relates to designing the wiring of an electrical cabinet and performing the wiring by automated machines.

In some embodiments, the automated wiring operation comprises a planning of wiring sequencing and optimization through simulations, which potentially reduce the setup time engineering of wiring electric cabinets and reducing actual wiring performance time. In some embodiments, the automated wiring machines comprise a plurality of sensors for tactile feedback, which potentially increases the insertion of wires in their correct location and potentially reduces the time of validation processes. In some embodiments, the automated wiring systems performs a plurality of optimization processes utilizing micro and macro operation analysis with Artificial Intelligence (AI) algorithms, which potentially reduces the set up time. In some embodiments, the automated wiring systems utilizes deep-learning and/or vision based algorithms for the component location and identification, which potentially increases the insertion of wires in their correct location and potentially reduces the time of validation processes and improves cabinet wiring cycle/performance time. In some embodiments, the automated wiring systems utilizes reinforced learning for wire insertion with impedance control, optionally also utilizes search routines, all which potentially increases the accuracy/performance of insertion of wires in their correct location.

In some embodiments, the automated wiring system comprises instructions to enable wire placement in cable channel/tracks to prevent disorganized wiring in the cabinet. In some embodiments, the automated wiring system comprises instructions to prevent wire twist during manipulation to secure proper routing of cable along a path. In some embodiments, the automated wiring system manages the cable slack when cable is held in two places - but not necessarily held at two ends. In some embodiments, the automated wiring system comprises instruction to avoid obstacles with cables along route in ducts or with actual cable tray/duct. In some embodiments, the automated wiring system comprises instruction to harness routing - meaning harnessing with multi-ending (more than 2) - with collision avoidance and slack management by junction identification, optionally by securing a location of the slack and cable drooping. In some embodiments, the automated wiring system comprises instructions to take under consideration the length of the wires and/or the number of wires previously positioned in the cable track/channel, for the planning and/or routing and/or positioning of the plurality of wires in the electrical cabinet. In some embodiments, the routing of a cable in a cable track/channel requires at least two cable manipulators (alternatively robotic arms or similar); one that secures the location of a cable (e.g. a corner) while the other continues with the positioning of the cable in the cable track/channel.

An aspect of some embodiments of the invention relates to insertion of wires into electrical connectors by robotic manipulators. In some embodiments, the robotic manipulators comprise smart holders comprising a plurality of sensors. In some embodiments, the holders comprise are finger-like holders. In some embodiments, insertion of wires comprises manipulating a wire and receiving feedback from a plurality of sensors about the status of the wire, optionally also in relation to the connector of a component. The term "connector" refers hereinafter to the place where a wire and/or a wire head is connected on a component. The term "component" refers hereinafter as any component that is part of an object in need of wiring (for example an electrical cabinet), for example a circuit breaker, an electrical component, a computer component, an electronic component, etc., which comprises a connector to which a wire and/or a wire head can be connected. The term "wire head" refers herein after to any end of a wire, whether comprises a dedicated mounting (for example a ferrule), or a dedicated connector (for example for data and/or video and/or network, etc.) of just exposed metal wires.

An aspect of some embodiments of the invention relates to manipulation of wires by two robotic manipulators, where the robotic manipulators hold the wire from two distinct points on the wires. In some embodiments, manipulating the wire comprises keeping a certain level of tension on the wire. In some embodiments, manipulating the wire comprises identifying tridimensional coordinates for each of the two manipulators in relation to a target while holding a wire to perform wiring actions. In some embodiments, before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

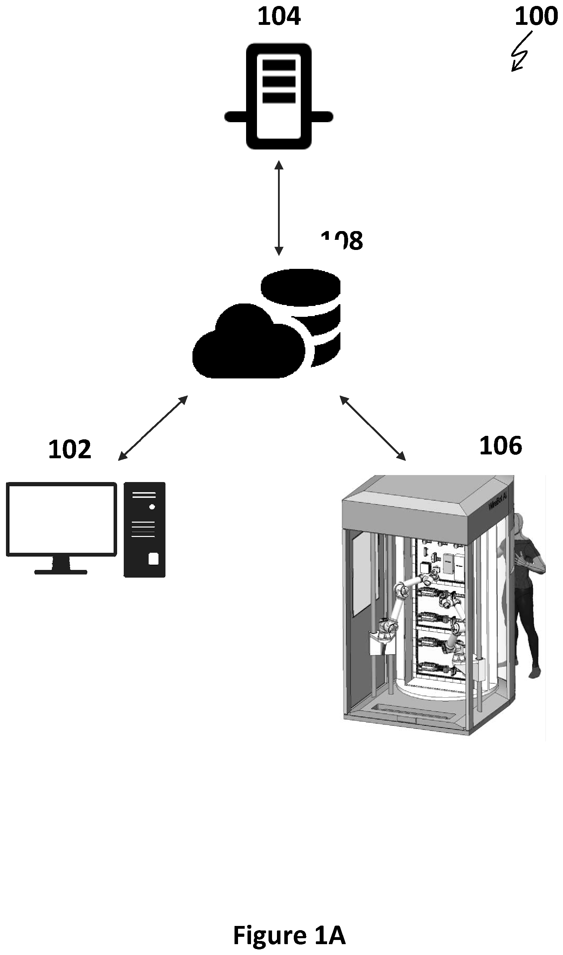

Referring now to the drawings, Figure 1A illustrates a schematic representation of an exemplary automated wiring system, according to some embodiments of the invention.

In some embodiments, the system comprises an electric designing software to be used in an electronic device **102**, for example one or more of a personal computer, a tablet, a cellphone and a dedicated designing station. For simplicity, the software and the electronic device will be referred herein after as designing console.

In some embodiments, the system comprises a database **104** comprising one or more of technical electrical data, electrical designs, mechanical drawings, business data and more.

In some embodiments, the system comprises one or more of an automated electrical wiring unit/system/module **106**, which will be further explained below.

In some embodiments, the software on the electronic device **102**, the database **104** and the one or more automated electrical wiring unit/system/module **106** are in communication with each other by one or more of wired connection, wireless connection and wireless connection via a cloud server **108**. In some embodiments, the database **104** and the cloud server **108** are one.

### Exemplary designing console

In some embodiments, the designing console comprises a specialized graphical interface unit (GUI) for virtually designing an electrical cabinet. In some embodiments, the user inserts all necessary information and requirements related to the project, comprising one or more of required switches, knobs and displays; demands for heat dissipation, radio frequency interference and electrostatic discharge protection; required number of wires, connectors, conduits; type of wires; wire information may include, wire gauge, color, insolation type, end piece type, and more, components in cabinet may include various electrical and electronic components such as switches, circuit breakers, relays, couplers, drivers, computer parts, boards, and more.

In some embodiments, the designing console **102** manages all design data including affiliated documents, such as bill of materials and connection lists or assembly instructions and datasheets. In some embodiments, a potential advantage of the designing console is that its objectoriented data structure ensures manufacturing instructions that always match the design data. In some embodiments, the designing console **102** is in communication with the database **104** that comprises component-based parts library that ensures that only real parts are used and, optionally, helps drive the design with automatic part selections.

In some embodiments, the designing console **102** is configured to help the user generating the plurality of plans necessary for the wiring of an electrical cabinet. For example, electrical schematics, which represent what type of wire goes where in the electrical cabinet; mechanical drawing, which represents a layout model of the different components inside the electrical cabinet (usually performed by an electrical engineer and/or a mechanical engineer).

In some embodiments, the database comprises a library of parts that previous users have used and/or inserted in the library. In some embodiments, the library of parts includes technical information regarding the specific parts, and each part is represented in either plan. For example, an electrical engineer will use a specific part from the library (for example a circuit breaker) for a certain wire connection (which will be shown in the electrical schematics), while the mechanical engineer will use the location of the part to identify the physical location of the insertion point of the wire.

In some embodiments, the designing console **102** is operated, for example, by a production engineer, which integrates both electrical schematics and mechanical drawings in one plan, which is used to operate the automated electrical wiring unit/system **106** for assembly. In some embodiments, the system itself automatically merges both plans and, optionally after approval of a production engineer (or other dedicated personnel), they are provided to the automated electrical wiring unit/system **106** for assembly. In some embodiments, in addition, a simulation is run before the actual assembly by the automated electrical wiring unit/system **106**. In some embodiments, the continuity of the data is preserved along the whole process, for example, from the planning of the cabinet, including the designing and merging of the electrical schematics and mechanical drawings, to the actual wiring of the cabinet, including the mounting of the components, the planning of the routing of the wires, the actions performed by each of the parts of the system. More information about the continuity of the data, the merging processes and other processes, can be found here: www(dot)smart-cabinet-building(dot)com/en/index.jsp. The contents of which are incorporated herein by reference in their entirety.

In some embodiments, when there is no mechanical drawings, only a Bill of Materials (BOM), an empty (not wired) cabinet can be scanned and analyzed using dedicated scanning software, which then recognizes the type of cabinet and/or components. In some embodiments, then the system generates a planning of the wiring based on the scanning and the BOM.

In some embodiments, the designing console **102** comprises a "built-in in real-time design rule checker" configured to check and potentially prevent errors. In some embodiments, a potential advantage of this feature is potentially avoiding errors *a priori*, which is better than finding them later at the production stage. In some embodiments, the designing console comprises base functionalities including: device duplication prevention, short circuit prevention, design reuse with centrally stored sub-circuits or modules, automatic and parallel connections, save, load, copy, rotate and mirror drawings and areas, extensive functionality for exchanging symbols and components, component driven intelligent parts libraries, ensure only valid parts are used in the design, simple and complex variants and option management, online cross-references for connections and devices, object and text hyperlinks, user-defined attributes, user-defined grid sizes, fonts and line types and dynamic zooming and panning.

In some embodiments, the designing console comprises design and documentation of wire plans and harness layouts. In some embodiments, individual conductors can be combined in the design to form new wires or harnesses. In some embodiments, shielding and twisted-pair structure can also be added to the wires and automatically shown in the schematic. In some embodiments, views allow alternate documentation of devices such as single-line diagrams, wiring diagram and wire plans. For example connectors can be represented as single pins in the schematic and then as the complete connector in the wire plan. In some embodiments, changes to any of the views immediately updates all other views, ensuring all documentation is synchronized.

In some embodiments, the designing console comprises block functionality. In some embodiments, blocks represent components, rack equipment, black boxes, PCBs and through hierarchy whole systems and subsystems. In some embodiments, connector pins are dynamically added to the blocks and signal information is displayed alongside. In some embodiments, blocks represent hierarchical systems and subsystems, so users can tunnel down into blocks to the level below and signals and connections can pass between levels and sub-levels. In some embodiments, hierarchy enables top-down and bottom-up design, promotes design reuse, and provides managers with a system-level overview. In some embodiments, special representations of connectors, as used in the aerospace and automotive industries, can be created automatically using dedicated extensions.

In some embodiments, the system comprises instructions to validate the design according to certain standards and or codes, for example, all the ground bars are properly located and sized in accordance with the regulations for example of the state/country/CE/UL.

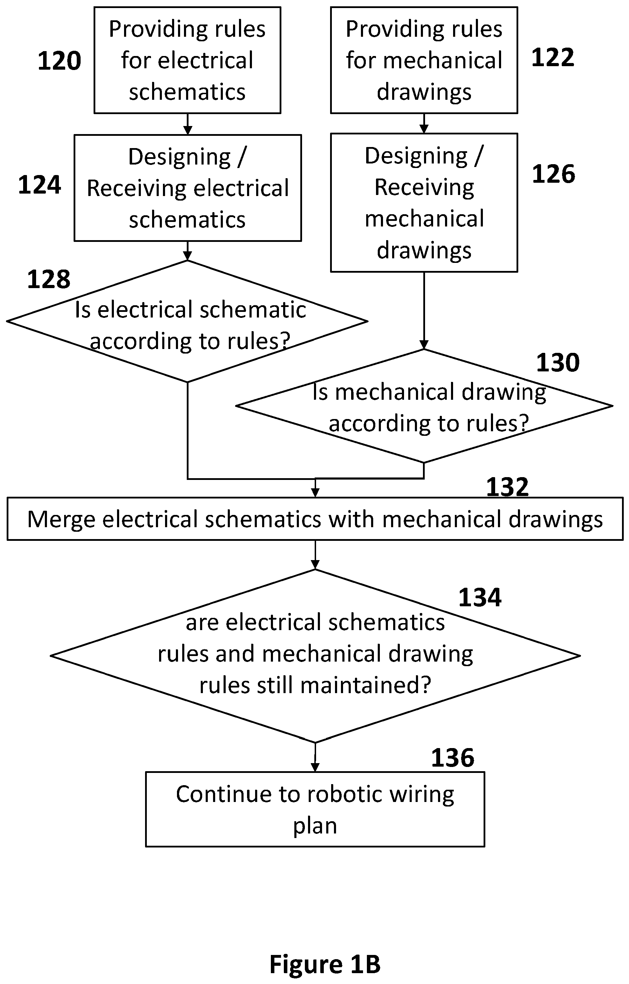

Referring now to Figure 1B showing a flowchart of an exemplary method of managing electrical schematics with mechanical drawings in and by the designing console **102**, according to some embodiments of the invention. In some embodiments, a user provides and/or inserts rules for electrical schematics **120** and/or mechanical drawings **122** into the designing console **102**. In some embodiments, the rules are rules related to one or more standards required by the government, special requirements by a client, technical limitations, and any other rule that a user will want to add to the designing console **102**. In some embodiments, a user then designs the electrical schematics **124** and/or the mechanical drawing **126** in the designing console **102** itself. In some embodiments, different designs are provided by different users and independently inserted into the designing console **102**. In some embodiments, designs are made elsewhere and manually inserted into the designing console **102**. In some embodiments, once the designs are received, the designing console **102** performs a check of the designs to ensure that they are according to the rules that were set **128**/**130**. In some embodiments, if there are problems with any of the designs, the system will notify the user. In some embodiments, correction are made in the designing console **102** itself. In some embodiments, the user bring corrected designs made elsewhere. In some embodiments, once the designs are approved, the designing console **102** merges between the electrical schematics and the mechanical drawings **132**, thereby generating a master wiring plan. In some embodiments, after the merge, the designing console **102** optionally performs an additional check of the rules of each of the designs to ensure all rules are still maintained **134**. In some embodiments, the system then continues to the preparing the robotic wiring plan **136**.

In some embodiments, the user inserts the technical data of the electric cabinet, comprising for example, the length and number of DINs, the actual space dedicated for the elements of the electrical cabinets which are needed to be wired. In some embodiments, the designing console **102** comprises instructions to perform a check of the electrical schematics and/or the mechanical drawings and/or the merge of them in view of the technical data of the electric cabinet inserted by the user. In some embodiments, when the designing console **102** finds a contradiction and/or a problem, it sends a message to the user. Optionally the user can edit the plan and recheck it

In some embodiments, the designing console enables the transfer of electrical cabling/wiring details (components, connectors, terminals, splices, netlist information) to the automated electrical wiring unit/system **106**.

In some embodiments, the designing console allows working in either two or three dimensions. In some embodiments, the designing console allows users to layout components inside panel enclosures. In some embodiments, intelligent automatic snapping points allow parts to be easily placed in their correct location, and with keep-out and height restrictions it is also possible to prevent clashes. In some embodiments, a potential advantage of the system is that it provides a system that is easy-of-use, which means that users potentially do not need to understand MCAD tools. In some embodiments, the software is configured to automatically plan the route of the wires through ducts in the panel, taking into account the shortest route and any segregation requirements. In some embodiments, duct fill capacity is also checked during the planning. In some embodiments, the length of each wire is calculated and that information is passed to the automated electrical wiring unit/system **106**.

In some embodiments, based on the plans and the routing of the plurality of wires, a priority of cable placement is generated based on one or more of the following exemplary aspects: physical constrains (e.g. inserting wire 11 before 12 into the device to avoid collision/obstruction); and optimization of the sequence based on other priorities (e.g. reduction of cycle time).

In some embodiments, the designing console utilizes simplified models of the electrical panel design to check for collisions in the complete mechanical design. In some embodiments, this functionality enables full digital mock-ups to assess spacing requirements, collision/interference detection and error prevention. In some embodiments, a plurality of users can utilize the system at the same time, optionally independently or collaboratively. In some embodiments, the designing console ensures that all changes are tracked and documented. In some embodiments, alternate revisions of the design are compared against each other and any changes are reported and stored in both graphical and textual formats. In some embodiments, manufacturing data is extracted from the design in the form of wire lists, which includes route and length information to the automated electrical wiring unit/system **106**.

### Exemplary simulation module

In some embodiments, the designing console comprises a simulation module comprising dedicated software comprising instructions to run virtual simulations of the performance of the electrical cabinet during and/or after the design process. In some embodiments, after the simulations are run, an optimization process is performed according and/or in view to the results of the simulations.

In some embodiments, the simulation module performs simulations in order to potentially prevent collisions of the system (for example, the robotic arms) with the cabinet parts. In some embodiments the simulation module performs simulations in order to validate various sequences in order to select the one with the best cycle time. In some embodiments, the simulation module is used for the validation of the placement of all the components included in the Bill of Materials (BOM), in the electrical cabinet. In some embodiments, the simulation module is used for validating all the plans are used in the design of the wiring of the electrical cabinet. In some embodiments, the simulation module is used for a pre-run of the automated electrical wiring unit/system **106**. In some embodiments, the simulation module will create and optionally download the code to automated electrical wiring unit/system **106**. In some embodiments simulation module is used for pricing the cost of the cabinet assembly to the end user. In some embodiments, the simulation is used to optimize the use of raw materials, for example, to minimize the total length of wire used, in order to save copper.

### Exemplary division of tasks to macro and micro processes

In some embodiments, the software of the designing console comprises instructions to divide the entire automated wiring process into a plurality of macro processes comprising a plurality of micro processes. In some embodiments, the optimization process, which includes the use of simulations, will ensure that the macro and micro processes are performed in an optimal manner according to the task, optionally by optimizing most, if not all, macro and micro processes. In some embodiments, the automated wiring systems performs the plurality of optimization processes utilizing micro and macro operation analysis with AI algorithms, which potentially reduces the set up time. In some embodiments, the AI algorithms are configured to analyze errors and/or recurring faults in the wiring performance and optionally correlate those with specific components and/or locations in the panel, to provide solutions and/or warnings in advance, when planning the wiring of a panel.

In some embodiments, the micro process is dependent on the specific tool used while similar macro process can use different micro processes relating to the actual devices in automated electrical wiring unit/system **106**.

In some embodiments, the micro operation library is part of a 3^{rd} party entity that provides the tools with its corresponding micro operations, for example a gripper can be electrically operated resulting in a micro operation that activates a motor to perform a grasping task; alternatively a pneumatic actuator may be used. In some embodiments, a micro operation may include a sensing module, for example to identify that a wire was actually secured in place.

### Exemplary automated wiring unit/system 106

In some embodiments, after the planning and/or designing of the electrical cabinet, the final designs are passed to the automated wiring unit/system **106** for assembly. In some embodiments, an electrical cabinet can be a panel, a system, an appliance or any other device in need of wiring.

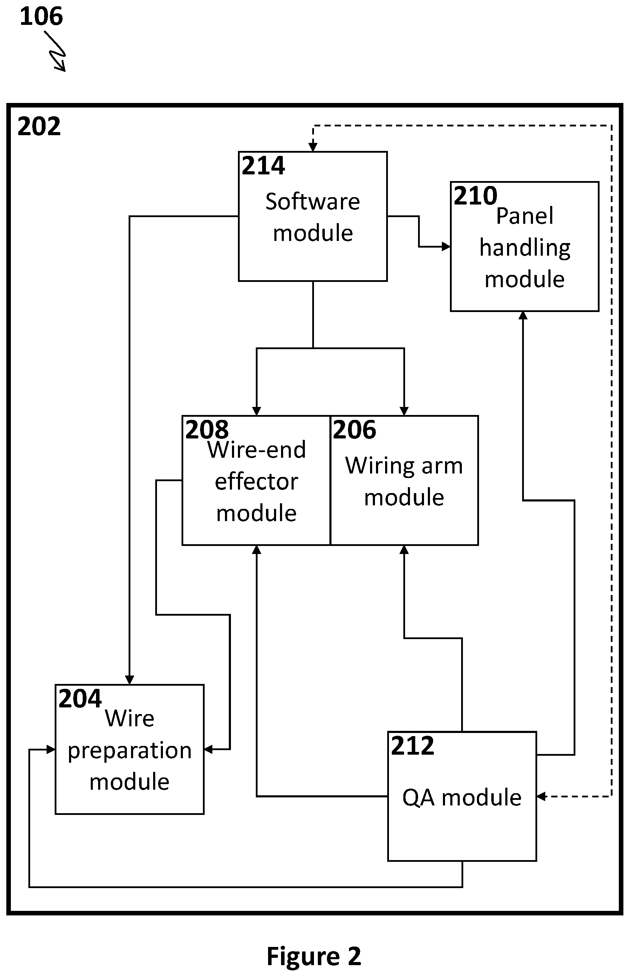

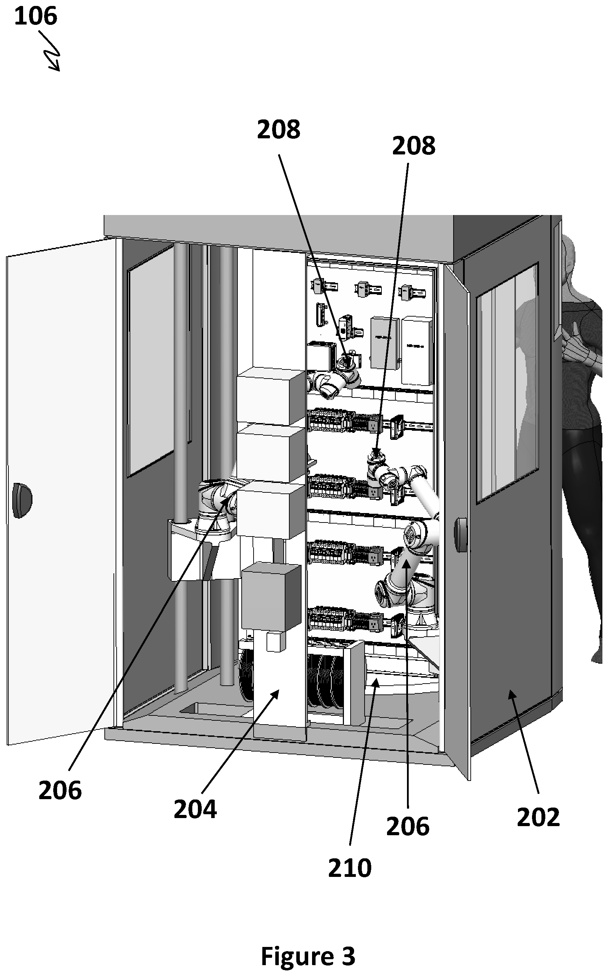

Referring now to Figures 2 and 3, showing a schematic representation (Figure 2) and a schematic illustration (Figure 3) of an exemplary automated wiring unit/system **106**, according to some embodiments of the invention. In some embodiments, an exemplary automated wiring unit/system **106** comprises one or more modules as part and/or inside the main casing **202**, for example: a wire preparation module **204**, one or more wiring arms modules **206**, one or more wiring-end effector modules **208**, panel handling module **210**, quality assurance (QA) module **212** (shown only in Figure 2) and a software module **214** (shown only in Figure 2).

### Exemplary software module 214

In some embodiments, the automated wiring unit/system **106** comprises a software module **214** in communication with all the different modules in the wiring unit/system **106** and with external systems. In some embodiments, the software module **214** receives the designing plans from the designing console (external system), and actuates the different modules in the automated wiring unit/system **106** to execute the wiring plans.

In some embodiments, the software module **214** is also responsible for debugging the system and perform and/or schedule maintenance of the system.

In some embodiments, the software module **214** includes an onsite simulation software that allows, amongst other things, to validate a process (or part of it) before and actual run.

In some embodiments, a user can edit the run time software, for example, to add new wires, to edit the route of an existing wire and/or to omit a wire. In some embodiments, wire parameters such a gauge, color, etc. may also be edited by a user. In some embodiments, a user can add testing and/or QA routines to the execution software.

### Exemplary panel handling module 210

In some embodiments, a variety of panel handling modules can support the process of loading and unloading a panel to system **106**. In some embodiments, the panel handling module **210** is configured to rotate the electrical cabinet on its axis, inside the automated wiring unit/system **106**, to facilitate one or more of loading the electrical cabinet, unloading the electrical cabinet and allow access of a user to equip the electrical cabinet while inside the automated wiring unit/system **106**. In some embodiments, the panel handling module can hold the panel vertically (as shown for example in Figure 3) and/or horizontally (as shown for example in Figure 15).

In some embodiments, the panel handling module is used in combination with an automatic or semi-automatic loading/unloading system. In some embodiments, the loading/unloading system is moving in linear fashion rather than rotation.

### Exemplary QA module 212

In some embodiments, the QA module **212** is in communication with all the modules of the automated wiring unit/system **106**, and it is configuration to perform a plurality of actions to ensure the correct functioning of the automated wiring unit/system **106**. In some embodiments, functions to be monitored are one or more of wire insertion validation, validation of location of electrical components in the electrical cabinet, wire routing verification, validation of correct actuation of locking mechanisms in electrical connectors of the components (for example by validating the torque of the screw holding the wire in the connector) and, optionally, wire connectivity validation and electrical integrity validation.

In some embodiments, the automated wiring machines comprise a plurality of sensors for tactile feedback, force feedback, moment/torque feedback which potentially increases the insertion of wires in their correct location, improves process reliability and potentially reduces the time of validation processes.

In some embodiments, a visual and/or optical system is used for QA. In some embodiments, various electrical circuits can be checked by providing various loads to the system, for example, by delivering current/voltage at different levels through the two elongated extensions **910a-b** (see below) or through a special tool that may be attached (automatically or manually) to the wiring arm modules. For example, the locking actuation mechanism that actuates the locking mechanism in the connector comprises a screwdriver that actuates a screw that presses on the wire. In some embodiments, current is used to perform a continuity/resistance test, for example by touching two components (one with each arm) and validating continuity through resistance and or current parameters.

In some embodiments, the automated wiring systems utilizes deep-learning algorithms for the component location and identification, which potentially increases the location validation and insertion of wires in their correct location and potentially reduces the time of validation processes.

In some embodiments, since it is possible that part of the components could partially concealed from the QA system (or only partially visible), the Deep Learning (D/L) algorithms of the system uses previously learned process to identify the parts and estimate their location.

In some embodiments, the D/L algorithms are used to predict a possible error in the routing system, for example, if a ground wire typically goes to port A in certain connectors but in one instruction-set a ground wire is (mistakenly) routed to port B - the system provides a warning or alternatively use other logic to see if port B can also accept the ground wire.

In some embodiments, the automated wiring systems utilizes reinforced learning for flexible wire insertion with impedance control, which potentially increases the insertion of wires in their correct location.

In some embodiments, the automated wiring system uses a search routine with a feedback system to locate the opening (port) for wire insertion in the connector of the component. In some embodiments, the automated wiring system uses a visual systems, with or without other sensors, to locate the opening of the connector in the component, before and/or during insertion of the wire. In some embodiments, the automated wiring system performs a dry run (a scan) above the components to validate the location of the opening of the connector in the component (using various sensors e.g. vision, optical, tactile) and provide a correction delta locations before the insertion routine is executed.

### Wire preparation module 204

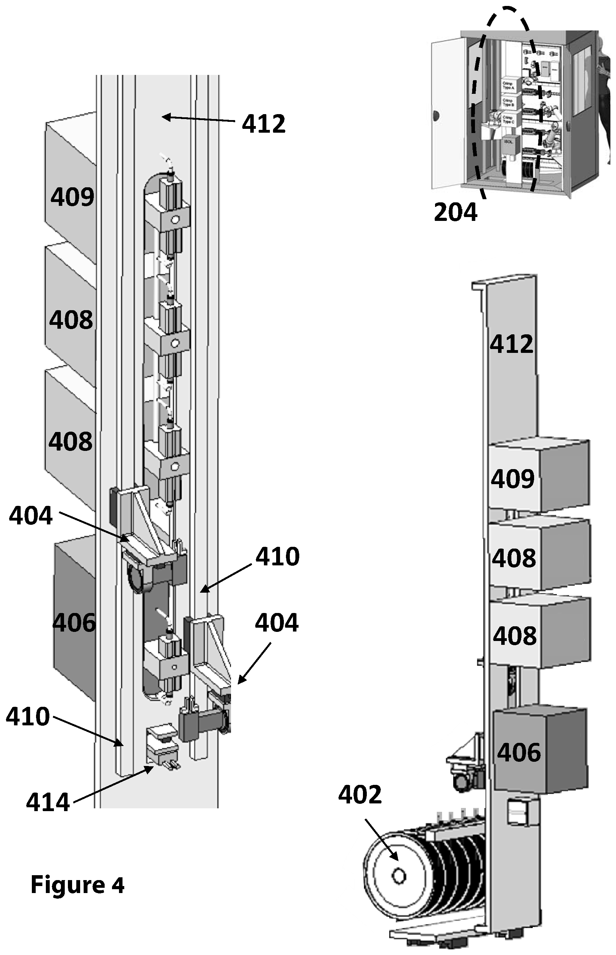

Referring now to Figure 4, showing a schematic representation of an exemplary wire preparation module **204**, according to some embodiments of the invention. In some embodiments, the automated wiring unit/system **106** comprises a wire preparation module **204**. In some embodiments, the wire preparation module **204** is an integral part of the automated wiring unit/system **106**. In some embodiments, the wire preparation module **204** is an independent module, optionally external to the automated wiring unit/system **106**. In some embodiments, the wire preparation module **204** is responsible for the preparation of the wires for their incorporation into the electrical cabinet by the automated wiring unit/system **106**.

In some embodiments, the wire preparation module **204** comprises one or more of the following parts: a plurality of wire stocks **402**, one or more wire manipulators **404** comprising a rail **410** which allows the wire manipulators **404** to move between modules (see below), at least one wire stripper module **406**, a plurality of wire-end connector (wire head) mounting modules **408**, a wire cutter **414** and a frame **412** configured to house all modules and parts of the wire preparation module **204**.

In some embodiments, the wire preparation module **204** comprises a wire marking device configured to add personalized markings to the wires being prepared. For example, the wire marking device can add numbers, letters, symbols, etc. by means of a laser, a sticker, or any other printing machine configured to print on the surface of a wire or configured to add a sticker or sleeve with marking on a wire. In some embodiments, a potential advantage of a wire marking device is that is allows, later on, to potentially easily find specific wires in the cabinet.

### Exemplary frame 412

In some embodiments, the wire preparation module **204** comprises a frame **412** configured to house all the modules and parts of the wire preparation module **204**. In Figure 4, the frame **412** is a vertical frame. To facilitate the understanding of the invention the following explanations will be referenced to the vertical frame as shown in Figure 4. It should be understood that other configurations of the wire preparation module **204**, in general, and specifically of the frame **412**, are still in the scope of the invention (for example see below exemplary horizontal automated wiring cabinet). In some embodiments, a potential advantage of having a vertical frame is that it allows to position different parts of the wire preparation module **204** in a sequential matter which also allows for the easy movement of the wires by the wire manipulators **404** during the wire preparation process. In some embodiments, the length of the frame **412** will dictate the maximal length of the rails **410**.

### Exemplary wire manipulators 404

In some embodiments, the wire manipulators **404** are configured to pick a first distal end of a required wire from wire stocks **402**, and transport it, first to the wire stripper module **406**, where the first distal end will be stripped to expose the wire core, then, optionally, to one of the plurality of wire-end mounting connectors **408** so, on the recently exposed wire core, a connector will be mounted. In some embodiments, exposed wire cores are left exposed to be inserted in the electrical cabinet. In some embodiments, when the required length of the wire is shorter than the maximal distance between two wire manipulators **404**, which is dictated by the length of the rails **410** (which are dictated by the length of the frame **412**), then the first wire manipulator will pull out as much wire as necessary, in the example disclosed in Figure 4, by moving upwards relative to the frame **412** and the wire stocks **402**), and a second wire manipulator will pick up the second distal end of the wire, will transport it to the wire cutter **414** where the wire will be cut therefore generating a send distal end of the wire. In some embodiments, then, as performed with the first distal end, the second wire manipulator will transport the second distal end, first to the wire stripper module **406**, where the second distal end will be stripped to expose the wire core, then to one of the plurality of wire-end mounting connectors **408** so, on the recently exposed wire core, a connector will be mounted.

In some embodiments, either before or after a wire-end connectors are mounted on the stripped wire, the wire itself can be optionally marked, as disclosed above, by a wire marking device.

In some embodiments, the wire stock moves laterally to position various wires into the feeding area. In some embodiments, the wire stock can include a plurality different reels of wire, for example from about 5 to about 10 different reels of wire, optionally from about 5 to about 20 different reels of wire, optionally from about 5 to about 50 different reels of wire, for example 5, 8, or 20 different reels of wires. In some embodiments, the reels may be replaced manually or automatically for different electrical cabinet assemblies.

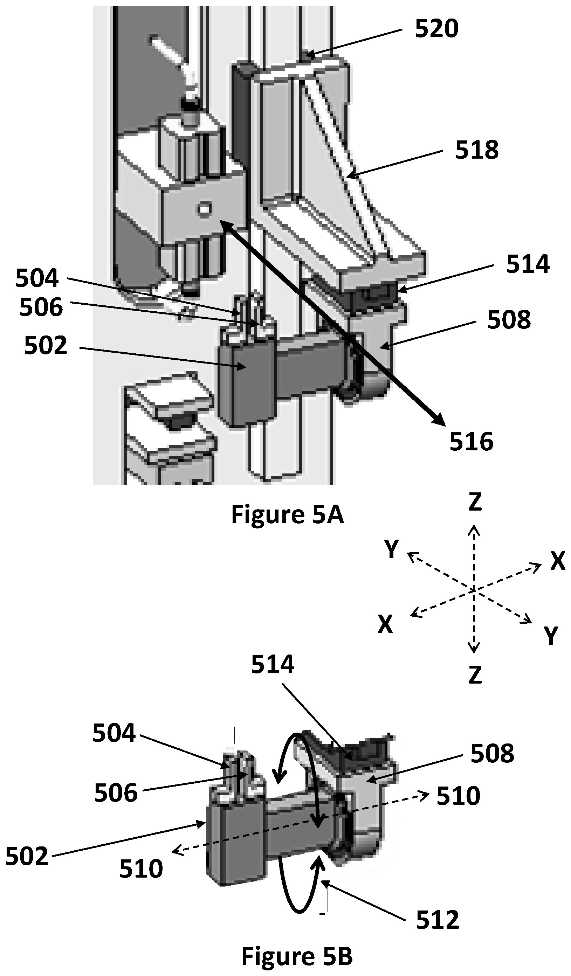

Referring now to Figures 5A-B, showing schematic illustrations of an exemplary wire manipulator **404**, according to some embodiments of the invention. In some embodiments, the wire manipulators **404** comprise a wire holder **502** configured to reversibly hold an end of a wire during the wire preparation process. In some embodiments, the wire holder comprises two elongated elements **504/506** configured to open and close and hold between them the end of the wire. In some embodiments, the force applied to hold a wire end between the two elongated elements is from about 0.5N to about 5N. In some embodiments, the wire holder **502** comprises one or more force sensors configured to monitor the force applied to the wire. In some embodiments, optionally, other sensors are used for wire to gripper interaction validation such as torque sensors, optical sensors and/or electrical conductivity/capacity sensors. In some embodiments, the wire holder **502** is connected to a wire holder base **508**. In some embodiments, the wire holding base **508** comprises a rotational mechanisms configured to allow rotation along the X axis **510** of the wire holder (see XYZ coordinate image), as shown for example by arrows **512** in Figure 5B. In some embodiments, a compliance miniature mechanism is holding the wire holding base **508** to provide out of alignment protection during insertion. In some embodiments, the wire holding base **508** is connected to a movable element **514** configured to move along the Y axis, as shown by arrow **516** in Figure 5A, over connector **518**. In some embodiments, connector **518** is mounted on a second base **520** configured to move along the Z axis (up and down) over the rails **410**.

In some embodiments, as can be understood by the above paragraph, the wire manipulator **404** is configured rotate the wire holder **502** along the X axis **510** to pick up an end of a wire from the wire stocks **402**, then rotating back the wire holder **502** so the end of the wire that was just picked up will face the modules and parts of the wire preparation module **204**. In some embodiments, the end of the wire is then inserted in each of the modules utilizing the movable element **514** configured to move along the Y axis, therefore inserting and extracting the end of the wire into and from the modules. In some embodiments, the wire is moved along the different modules by moving the second base **520** along the Z axis (up and down) over the rails **410**.

### Exemplary wire stripper module 406

In some embodiments, the wire stripper module is configured to automatically strip the cover (usually plastic or other material for insulation) from the end of the wire and to expose the wire core (usually made of metallic wires). In some embodiments, additionally or alternatively, a programmable a stripping knife is used to strip the wire cover.

### Exemplary wire-end connector (wire head) mounting modules 408

In some embodiments, the wire-end connector mounting module is configured to receive a stripped end of a wire and automatically mount a connector/wire head, also known in the art, for example, as *ferrule*. Wire connectors/wire heads are known in the art, and they can be for example one or more of ring connectors, spade connectors and blade connectors.

### Exemplary wire cutter 414

In some embodiments, the wire cutter is configured to cut the wire.

### Exemplary wire stocks 402

In some embodiments, the wire preparation module **204** comprises a plurality of wire stocks **402**. In some embodiments, the wire stocks comprise a plurality of different types of wires that are used in electrical cabinets, for example: shielded wires, different gauge wires, different color of wires and/or different type of insulation e.g. for RF. In some embodiments, optionally, the wire stocks are coupled to an automated feeder configured to release as much wire as needed, for example configured to release the necessary length of a required wire. In some embodiments a labeling module **409** is added to the wire preparation module to mark the wire. In some embodiments, a label may be printed on a sleeve and inserted to the wire before the end piece. In some embodiments, a printed label is attached to a wire (called a flag). In some embodiments, a printed indication is printed directly on the wire.

### Exemplary wire preparation method

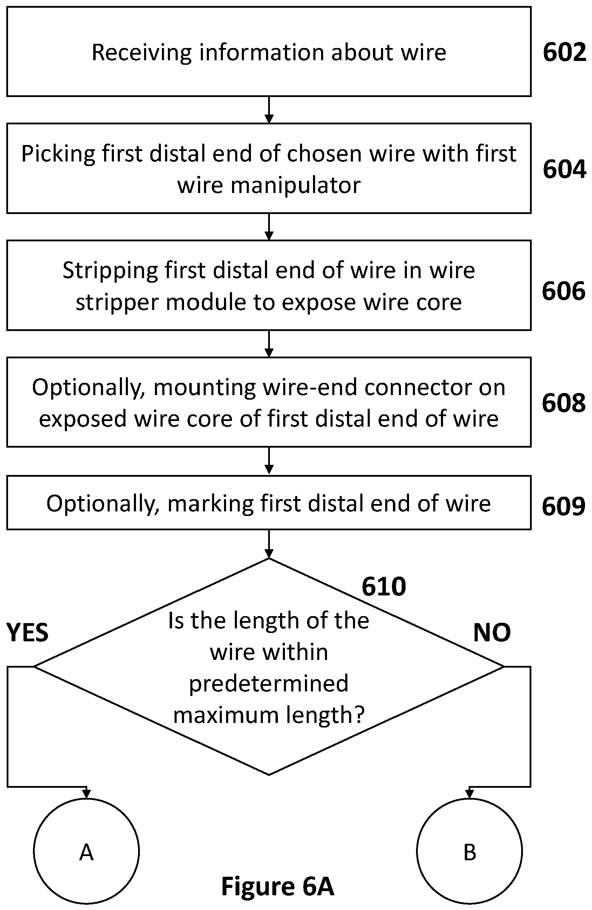

Referring now to Figures 6A-C, showing flowcharts of exemplary methods of wire preparation, according to some embodiments of the invention. In some embodiments, the system receives information about the necessary wire **602**. In some embodiments, information about the wire comprises one of more of type of wire and length of wire. In some embodiments, a first wire manipulator picks an end of the chosen wire **604**. In some embodiments, the first wire manipulator moves the end of the wire into the stripper module **406** therefore stripping the cover of the wire core and exposing the wire core **606**. In some embodiments, optionally, the first wire manipulator moves the stripped end of the wire into the relevant wire-end connector mounting module **408**, thereby mounting a wire-end connector/wire head over the stripped wire core **608**. In some embodiments, optionally, the first wire manipulator moves the end of the wire into a labeling module **409**, thereby marking and/or providing an identification to the wire **609**.

In some embodiments, as mentioned above, the maximal distance between two wire manipulators **404** is dictated by the length of the frame **412**, which limit the length of the rails **410** used for the movement on the Z axis of the wire manipulators **404**.

In some embodiments, the system assesses if the length of the wire is within the predetermined maximum length **610** that is set according the maximal distance between two wire manipulators **404**.

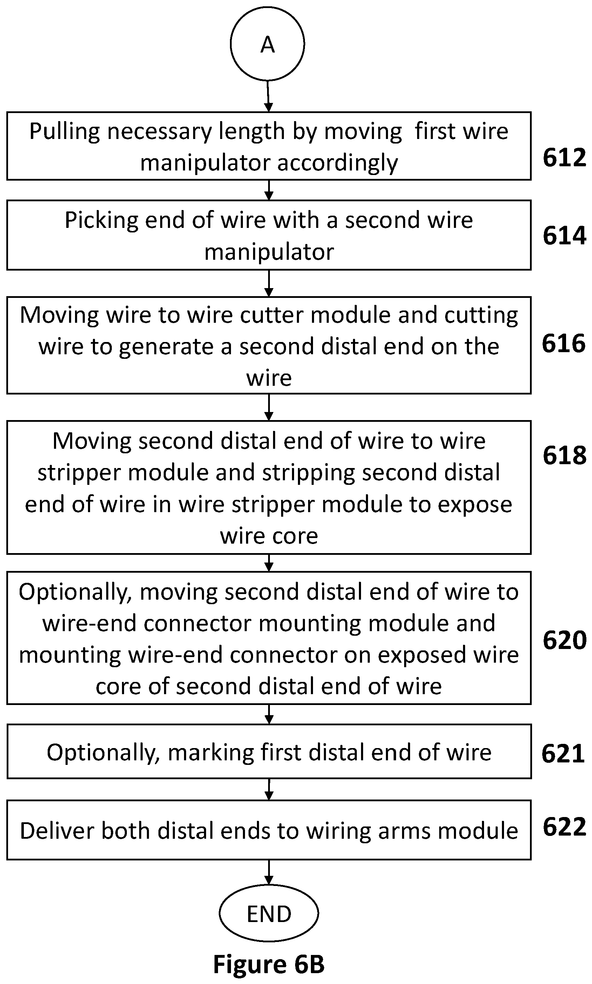

In some embodiments, when the answer is "yes" (following the letter "A" to Figure 6B), the wire manipulator that is holding the wire, on which a wire-end connector was just mounted, will distance itself from a second wire manipulator the required distance necessary to provide the required length of the wire **612**. In some embodiments, the second wire manipulator will pick the wire and the chosen location according to the necessary length **614**. In some embodiments, the second wire manipulator will move the wire towards the wire cutter **414**, the wire cutter will cut the wire, thereby generating a second end of that wire **616**. In some embodiments, while the wire cutter cut the wire the second wire manipulator will keep holding the end of the recently cut wire. In some embodiments, same as performed with the first end of the wire, the second manipulator will move the second end of the wire into the stripper module **406** therefore stripping the cover of the wire core and exposing the wire core **618**. In some embodiments, optionally, the second wire manipulator will move the stripped second end of the wire into the relevant wire-end connector/wire head mounting module **408**, thereby mounting a wire-end connector over the stripped wire core **620**. In some embodiments, optionally, the second wire manipulator moves the end of the wire into a labeling module **409**, thereby marking and/or providing a second identification to the wire **621**. In some embodiments, at this point there is a wire having two ends with necessary connectors, held by two different wire manipulators. In some embodiments, at this point, the wire ends are delivered to the wiring arms module **622** for further installation into the wire cabinet (as will be further detailed below).

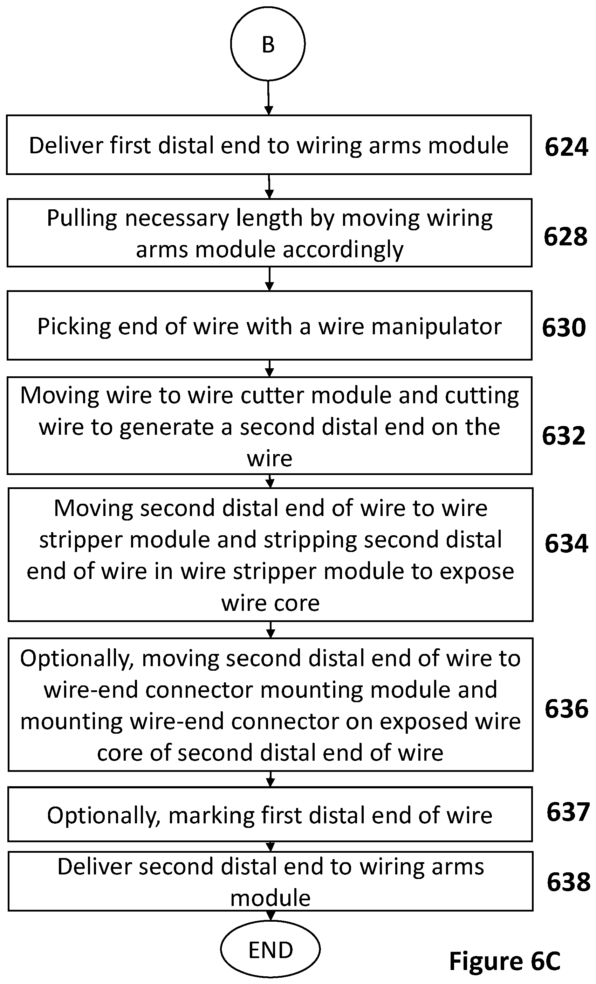

Returning to Figure 6A, when the answer is "no" (following the letter "B" to Figure 6C), the wire manipulator that is holding the wire, on which a wire-end connector was just mounted, will deliver the first end to the wiring arms module **624**, which will pull, using both arms of the wiring arms module, the necessary length of the wire **608**. In some embodiments, once the length has been achieved either the first or the second wire manipulator will pick the wire and the chosen location according to the necessary length **630**. In some embodiments, the first/second wire manipulator will move the wire towards the wire cutter **414**, the wire cutter will cut the wire, thereby generating a second end of that wire **632**. In some embodiments, while the wire cutter cut the wire the first/second wire manipulator will keep holding the end of the recently cut wire. In some embodiments, same as performed with the first end of the wire, the first/second manipulator will move the second end of the wire into the stripper module **406** therefore stripping the cover of the wire core and exposing the wire core **634**. In some embodiments, optionally, the first/second wire manipulator will move the stripped second end of the wire into the relevant wire-end connector mounting module **408**, thereby mounting a wire-end connector over the stripped wire core **636**. In some embodiments, optionally, the first/second wire manipulator moves the end of the wire into a labeling module **409**, thereby marking and/or providing an identification to the wire **637**. In some embodiments, at this point there is a wire having two ends with necessary connectors, one end held by the wiring arms module and the second end held by the first/second wire manipulator. In some embodiments, at this point, the second wire end is delivered to the wiring arms module for further installation into the wire cabinet (as will be further detailed below).

### Exemplary wire delivery unit

In some embodiments, ready to be used wires are provided in advance by providing pre-cut wires that are ready to be wired into an electrical cabinet. In some embodiments, pre-cut wires are acquired as is from a 3^{rd} party. In some embodiments, pre-cut wires are prepared in advanced by a wire preparation module. In some embodiments, read to be used wires are put in the reach of the mechanical arm modules. In some embodiments, when pre-cut wires are used and made available to the mechanical arm modules it is called to be used a wire delivery unit for providing wires to be inserted in the electrical cabinet by the automated system. In some embodiments, a dedicated fixture is used to present the precut wire to the system, for example, the fixture is built with provision to hold wires according to their lengths, alternatively, according to their order/sequence. In some embodiments, optionally, the wire delivery unit can be mobile and be attached to the system as may be needed. In some embodiments, optionally, the wire delivery unit can serve multiple systems. In some embodiment the wire prep module includes a hand over mechanism that delivers and or present the wire(s) to the wiring system for example with a manipulator, dual arms, pneumatic axes etc.

### Fine motors skills and wiring

Before explaining at least one embodiment of an exemplary wiring arms module **206** and an exemplary wiring end-effector module **208** of the invention in detail, the inventors would like to convey one of the many possible challenges in the robotic automation performance in general, and specifically, in the robotic automation for electrical wiring and robotic wiring manipulation. The inventors have found that in order to perform correct wiring of electrical wires into an electrical cabinet a certain level of dexterity and/or sensibility (meaning high levels of wire manipulation capabilities) is required and, apparently, in some instances, at least two hands. For example, a technician and/or a user, utilizing his somatosensory system (for example: touch), needs to hold the wire with one hand, insert the wire as is or the wire with a wire head in the electrical socket or electrical terminal connector of a component, and with the other hand perform the locking actions to lock the wire in the socket. The terms "electrical socket" and "electrical terminal connector" are interchangeable and should either of them be mentioned, it should be understood that either refer to the same thing, which is an object in a component configured to receive a wire for purposes of connecting and/or holding an electrical wire to the component. Furthermore, depending on the type of wire end, the user must use just the necessary force when inserting the wire into the socket for, on one side, inserting and keeping the wire in the socket while it is being locked and, on the other side, avoiding deformation of the wire due to the application of excessive force. It is also common in the art for the user to "feel" that the wire is secured in location by slightingly pulling it after the locking action has been performed. In the following paragraphs exemplary actions performed by a human will be described to allow a person having skills in the art to understand the challenges when translating apparent easy tasks performed by humans into robotics.

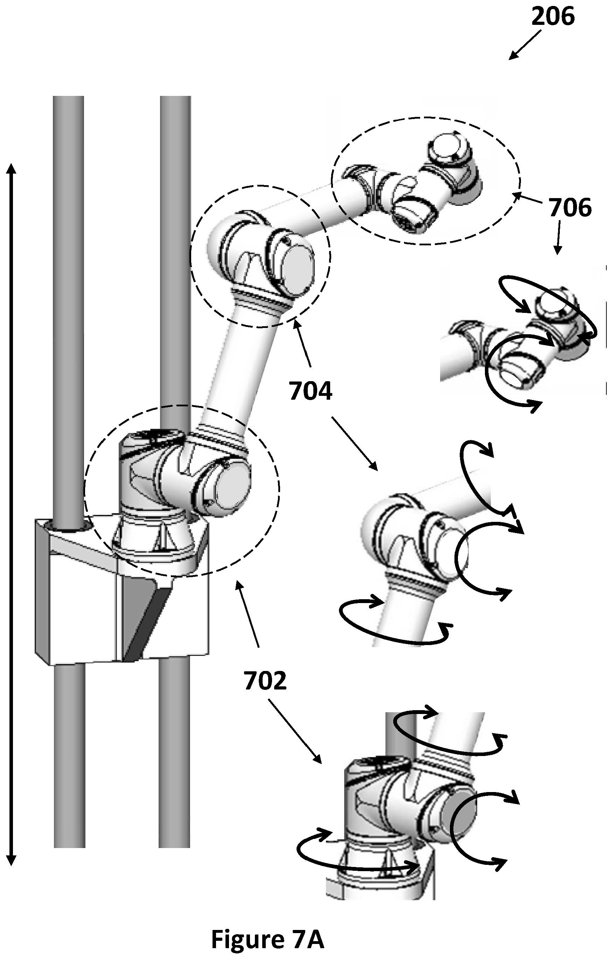

In some embodiments, the robotic systems comprise fine motor skills (or dexterity). In some embodiments, the automated wiring system (in general) and the wiring arms modules of the present invention comprises one or more of the following technical characteristics:
Articulation: in some embodiments, the arm modules together with the wiring-end effector module comprise a plurality of articulations that confers a plurality of degrees of freedom of movement to the system. Referring now to Figure 7A, schematically showing an exemplary wiring arm module **206** comprising a plurality of articulations, according to some embodiments of the invention. In some embodiments, the wiring arm module **206** comprises a plurality of articulations **702**, **704**, **706**. In some embodiments, the articulations confers a plurality of degrees of freedom of movement. For example, articulations **702**, **704**, **706** can potentially confer between 4 to 8 degrees of freedom of movement as shown by the arrows. It should be understood the articulations disclosed herein are just examples to allow a person having skills in the art to understand the invention, and that greater or fewer articulations can be used. In some embodiments, the system can be Cartesian with rotary end effector or fully articulated.

Exemplary Sensibility: in some embodiments, the arm modules and the wiring-end effector modules comprise a plurality of sensors (see below) configured to monitor the interactions of the modules with the wires and/or the wire cabinet. In some embodiments, the arm modules and the wiring-end effector modules are actuated using a combination of motors, sensors and software that enable compliance based mechanisms with antagonistic elastic actuation as opposed to rigidlinkage based robot grippers. In some embodiments, this allows a higher variability in gripping force control. In some embodiments, the software comprises information regarding payload weights/stiffness and structure and program that enhances the correct function (grasp planning) of the grippers without overshoot.

In some embodiments, parts of the arms and or grippers may be automatically changed for specific tasks for example to hold different tools such as tweezers or cutters.

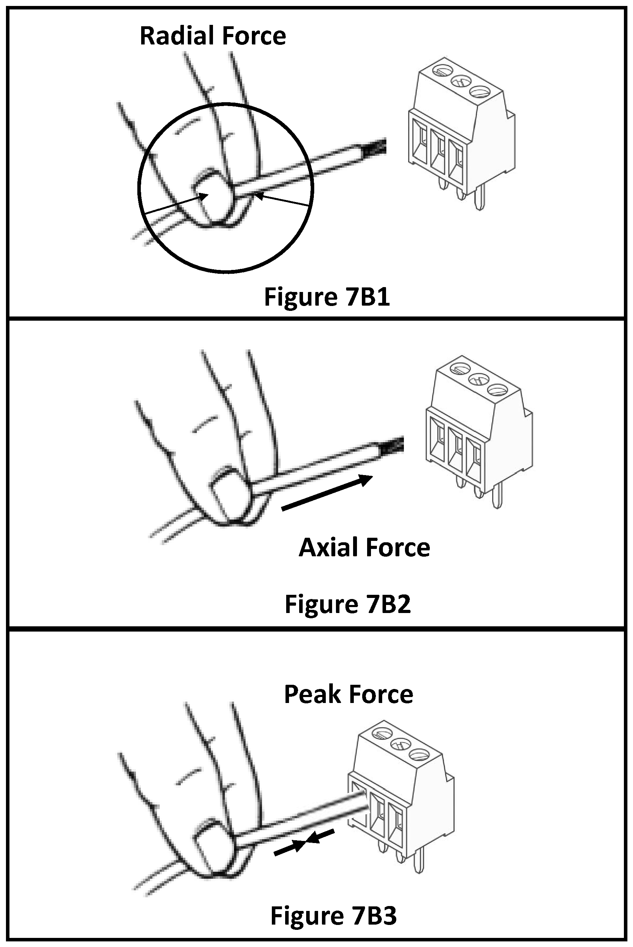

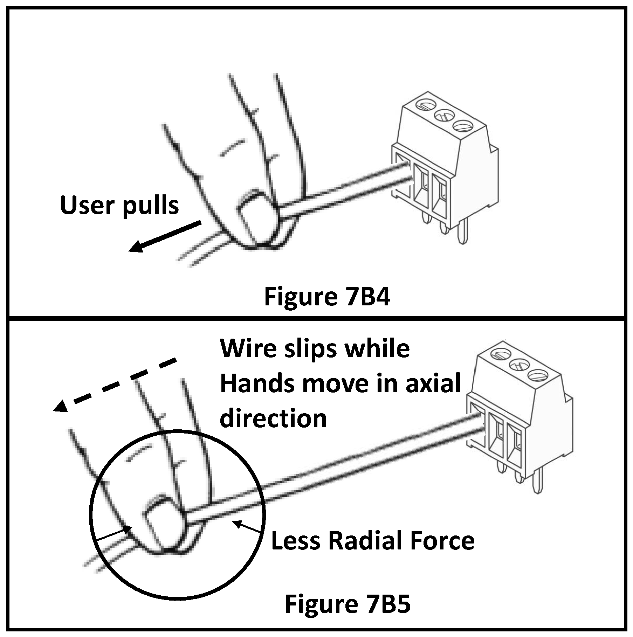

Grip and Slip capabilities: when a human performs wiring actions, he/she uses tactile feedback to secure a cable into a connector/device, a typical cycle of actions includes (see Figures 7B1-7B5):
- Gripping tight the wire during insertion by applying radial force on the wire (radial force - Figure 7B1) and applying an insertion force (axial force - Figure 7B2) - before contact force is zero and it grows during insertion);
- At a certain peak force (as determined by user experience) he "feels" that the wire is inserted in the connector (peak force - Figure 7B3) of the component. Usually at this point, the axial force is countered by the complete insertion of the wire in the connector in the component;

- After the wire is secured in the connector, the user pulls back the wire (to feel if it is tightly secured) at a certain force (user pulls - Figure 7B4);
- Then, the user apply less radial force on the cable (the grip force) and allows the cable to slip in the hand in the axial direction (Figure 7B5). Usually, the user feels the slip of the cable without releasing the wire.

In some embodiments, these actions are performed using capabilities that are referred herein as Grip and Slip capabilities.

In some embodiments, the wiring arm modules **206**, comprising the wiring-end effector modules **208**, comprise a plurality of motors and sensors that perform forces and measurements of the axial and radial forces, similarly to the actions performed by a human, in order to provide a system with high levels of dexterity and sensibility capable to perform wiring actions. In some embodiments the wiring-end effector module **300** includes one or more optical sensors, for example, one or more cameras and/or lasers scanners. In some embodiments, the wiring-end effector module **300** includes multiple 2D and/or 3D cameras.

### Exemplary wiring arms modules 206

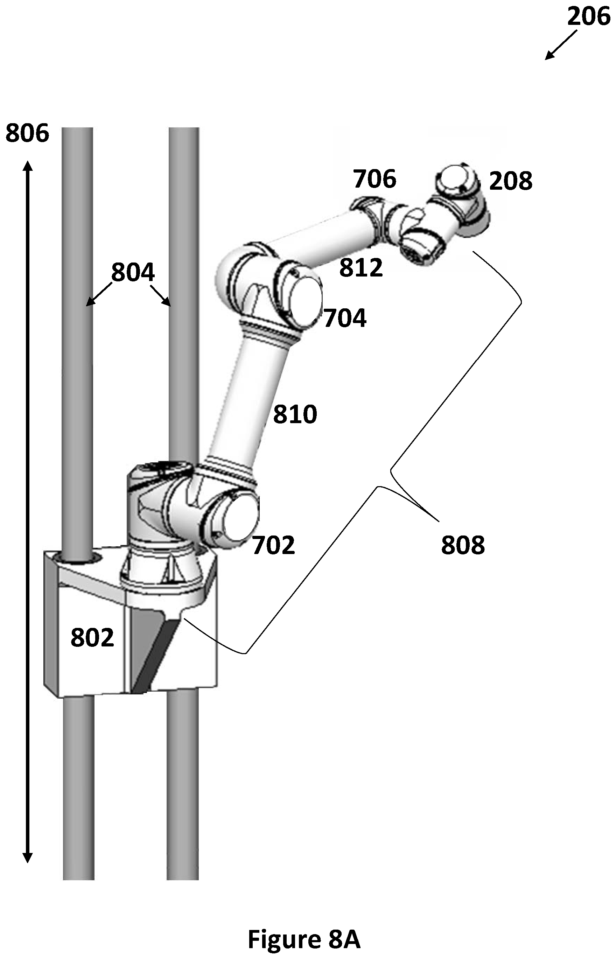

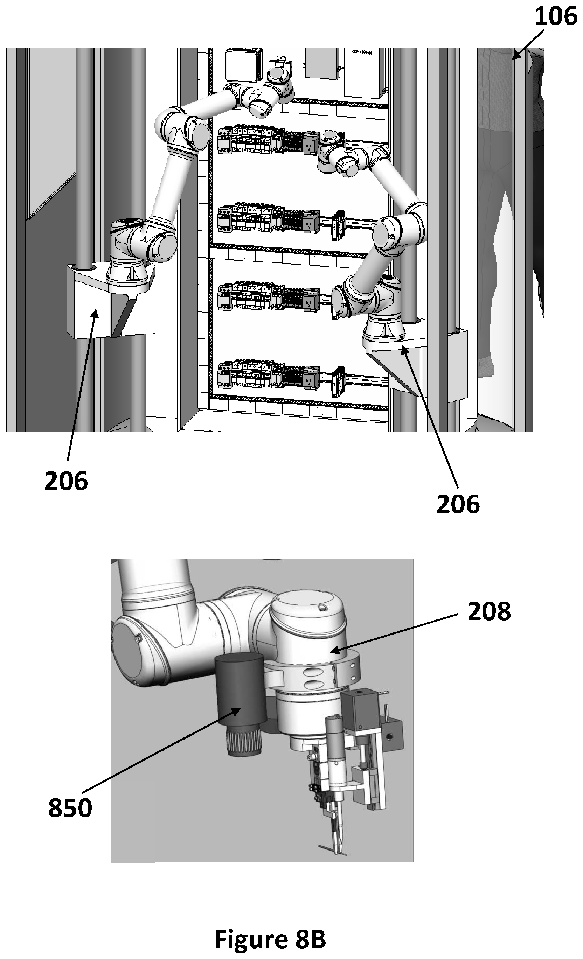

Referring now to Figures 8A-B, showing a schematic representation of exemplary wiring arm modules **206**, according to some embodiments of the invention. In some embodiments, a wiring arm module comprises a base **802**, mounted on a rail **804**. In this example, the rail **804** comprises two vertical tubes on which the whole wiring arm module moves vertically, as schematically shown by arrow **806**. In some embodiments, mounted on the base **802**, there is the mechanical arm **808** comprising a plurality of arm parts **810**, **812** and articulations **702**, **704**, **706**. In some embodiments, at the end of the mechanical arm **808** there is the wiring-end effector module **208**. Referring now to Figure 8B, showing a schematic representation of two exemplary wiring arm modules **206** in a wiring unit/system **106**, according to some embodiments of the invention. In some embodiments, each wiring arm module **206** is located at a side of the wiring unit/system **106**. In some embodiments, a potential advantage of locating them this way is that it provides the necessary space for each mechanical arm to move freely without interfering with the movement of the other mechanical arm. In some embodiments, each wiring arm module **206** comprise a wiring-end effector modules **208**, optionally comprising a camera **850**. It should be understood that in any of the embodiments of the wiring-end effector modules **208**, a camera is optionally added.

In some embodiments, the wiring arm module is optional, meaning a more simplistic holder of the wiring-end effector module **208** can be used. In the following paragraphs, examples of an automated wiring system comprising dedicated wiring arm modules **206** will be used to explain the invention. It should be understood that other types of platforms capable of actuating the wiring-end effector module **208** can be used and are also included in the scope of the invention.

In some embodiments, a typical arm has a payload of about 10Kg and accuracy of better than 0.1mm. In some embodiments, a Cartesian gantry style arm or dual arms are used for main movement (XYZ) while the fine local movement is done by 2 or 3 rotating axes along with an end effector.

### Exemplary wiring-end effector modules 208

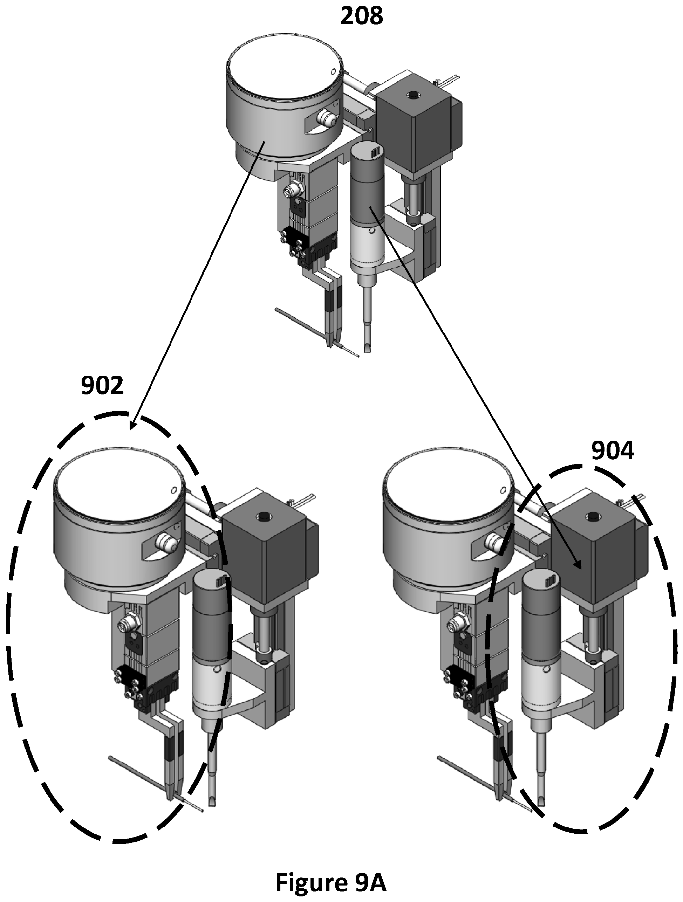

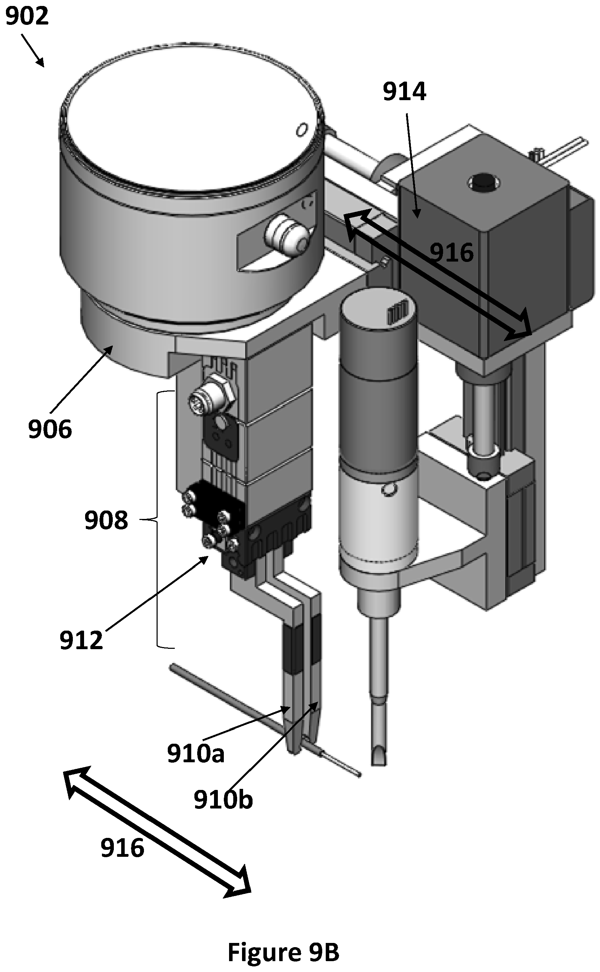

Referring now to Figure 9A, showing a schematic representation of an exemplary wiring-end effector module **208**, according to some embodiments of the invention. In some embodiments, at the wiring-end effector module **208** comprises one or more of the following parts: a wire holding element **902** and a wire locking element **904**. Referring now to Figure 9B, showing a schematic representation of the parts of the wire holding element **902**, according to some embodiments of the invention. In some embodiments, the wire holding element **902** comprises one or more of a base **906** comprising wire pinching element **908**. In some embodiments, the wire pinching element **908** comprises two extensions **910a-b**, optionally two elongated finger-like extensions, which are brought together, for example, by an electrical mechanism **912** and/or by a pneumatic mechanism. In some embodiments, the wire pinching element **908** comprises a gimbal block **970** to which the two extensions **910a-b** are connected (see below further explanations regarding gimbal block **970**). In some embodiments, the base **906** comprises a motor **914** that allows a horizontal movement of the wire holding element **902**, in the direction as schematically shown by arrow **916**. In some embodiments, alternatively or additionally, the wiring arm module provides the motion along schematic arrow **916**. In some embodiments, the horizontal movement shown by arrow **916** is the direction along the axis of the wire towards the electrical terminal connector. In some embodiments the motion is in line with the wire terminal port that may be, for example, at an angle of 30, 45, 90 degrees (or any angle in between) from the plane of the panel.

Referring now to Figure 9C1, showing a schematic representation of the sensors located on the elongated extensions **910a-b**, according to some embodiments of the invention. In some embodiments, one or more of the elongated extensions **910a-b** comprise one or more sensors **918** configured to monitor the force applied by the elongated extensions **910a-b** on the wire **920**. In some embodiments sensors are embedded in the finger or the body of the end-effector. In some embodiments, those sensors allow for the measurements of the axial and radial forces, similarly to the actions performed by a human, which provide a system with high levels of dexterity and sensibility capable to perform wiring actions, as explained above. In some embodiments, sensors are based for example, on strain gauges, load-cells and/or others. In some embodiments, additionally or alternatively, mechanism that can sense forces or moments (i.e.: sensors) are located on the part where the extensions are connected to the device, for example the gimbal block (see **970** in Figure 9C2), as shown and explained below for Figures 9C2-9C3.

In some embodiments, the wire holding element **902** is responsible for holding the wire once it is received from the wire manipulators **404** of the wire preparation module **204**.

In some embodiments, the elongated extensions **910a-b** can be replaced, automatically and/or manually, to accommodate a different wire gauge.

In some embodiments, electrical mechanism **912** includes an anti-collision mechanism that protects the fingers.

In some embodiments, electrical mechanism **912** includes sensors that can measure moments that are applied by the elongated extensions **910a-b** during insertion, for example moments at a value of from about 0.01NM to about 0.1NM.

Referring now to Figures 9C2-9C3, showing schematic representations of exemplary gimbal blocks to which the extensions are connected, according to some embodiments of the invention. In some embodiments, the gimbal block **970** comprises a plurality of parts that allow the monitoring of forces applied on the extensions **910a-b**. In some embodiments, the plurality of parts are one or more gimbals mounted on top of each other but having different axis of movement. In order to facilitate the explanations, two axis of movement will be described. It should be understood that more gimbals can be use, thereby providing more than two axis of movement that can be monitored. These are also part of the scope of the invention. Returning to Figure 9C2, the gimbal block **970** comprises a top block **972**, which connects the gimbal block **970** to the rest of the device. In some embodiments, below the top block **972** there is a top connector **974**, which is connected to the top block **972** by means, for example, of screws **976**. In some embodiments, one or more damping springs **996** in communication with one or more Button Axis Load Cells **978** are housed between the top block **972** and the top connector **974**. In some embodiments, calibration of the Load Cells is performed by actuating the Damping Force Calibrating set screw **980**. In some embodiments, below the top connector **974** there is a center block **982**. In some embodiments, inserted in the top side of center block **982** there is a first gimbal axis **984**, which confers the axis of movement perpendicular to the pin of the first gimbal axis **984** in the horizontal direction (see below explanations about the movement of the gimbal block). In some embodiments, inserted on the bottom side of the center block **982** there is a second gimbal axis **986** (shown in an inserted position). In some embodiments, the second gimbal axis **986** is perpendicular to the first gimbal axis **984.** In some embodiments, the second gimbal axis **986** confers the axis of movement perpendicular to the pin of the second gimbal axis **986** in the horizontal direction (see below explanations about the movement of the gimbal block). In some embodiments, below the center block **982**, there is a bottom connector **988**, which is connected on the top to the center block **982** and on the bottom to a bottom block **990**. In some embodiments, not shown in Figure 9C2, another set of one or more damping springs in relation/interface with another set of one or more Button Axis Load Cells are housed between the bottom connector **988** and the bottom block **990**. In some embodiments, the extensions **910a-b** are connected to the bottom block **990**.

In some embodiments, the device comprises one gimbal block **970** to which both extensions **910a-b** are connected. In some embodiments, the device comprises two gimbal blocks **970**, one gimbal block **970** for each extension, as shown for example in Figure 9C3.

Referring now to Figure 9C3, showing schematic representation of the exemplary movements of the gimbal block **970** and an exemplary embodiment of a device comprising two gimbal blocks, according to some embodiments of the invention. In some embodiments, as mentioned above, the gimbal block **970** comprises a first gimbal axis **984**, which provides the gimbal block **970** movement in a first axis, and a second gimbal axis **986**, which provides the gimbal block **970** movement in a second axis. InFigure 9C3, , a side view of the gimbal block **970** is shown, showing the movement (arrow **992**) enabled by the first gimbal axis **984**. Additionally, inFigure 9C3, , a front view of the gimbal block **970** is shown, showing the movement (arrow **994**) enabled by the second gimbal axis **386**. In some embodiments, the first gimbal axis **984** and the second gimbal axis **986** provide the gimbal block **970** with dual rotational axes at different locations. In some embodiments, these rotational axes are used with the single axis load cell to measure moments and force applied on the extensions. In some embodiments, as shown in Figure 9C3, , the two extensions are each separately connected to a gimbal block **970**, therefore allowing measurement of different forces on each extension. In some embodiments, when the gimbal mechanisms reach their limit of rotation (movement), which optionally implies an access of force applied on an extension (for example during a possible collision of the device with the electrical panel), the system may halt the insertion operation of the wire and/or take corrective actions (moving the device).

Referring now to Figure 9D, showing a schematic representation of an exemplary wire locking element **904**, according to some embodiments of the invention. In some embodiments, the wire locking element is configured to interact with the wire locking mechanism of a component after the wire is inserted in the respective electrical terminal block of that component in the wire cabinet. In some embodiments, components used in the cabinet can comprise different types of locking mechanisms in their connectors, for example: screw terminal, push button and/or push-in. In some embodiments, when using a component comprising an electrical terminal connector comprising a push-in locking mechanism, a wire locking element **904** is not needed and therefore not used. In some embodiments, screw terminal or screw type terminal blocks (components) secure the wire against the conductor in the terminal block (component) by tightening a screw which closes a clamp. In some embodiments, push button terminal blocks secure the wire against the conductor by a spring clamp that is opened by pressing a button. In some embodiments, releasing the button clamps the spring onto the wire. In some embodiments, similar to the push button with a spring clamp, a push-in terminal block allows the wire to be pressed directly into the housing without the use of a push button to open the spring. In some embodiments, according to the type of locking mechanism in the terminal block (component), the wire locking element **904** will comprise a dedicated actuator **922**. For example, in Figure 9D, the wire locking element **904** comprises a flat head screwdriver **922** which is used to secure screw type terminal blocks. In some embodiments, the head of the actuator and/or the drill bit **322** can be replaced manually or optionally automatically (for example, by moving the device towards a replacement rack where the vertical movement **330** is used to replace the head of the actuator **322**). Referring now to Figure 9E1, showing schematically representations of a plurality of possible interactions of wiring-end effector modules **208** with different types of terminal blocks (components) having different locking mechanisms of the wire in the connector of the component.

Returning to Figure 9D, in some embodiments, the wire locking element **904** comprises a motor **924** configured to actuate the dedicated actuator **922**. In some embodiments, the motor **924** and the dedicated actuator **922** are held by a base **926**, which is further connected to a second motor **928** that performs a vertical movement, as schematically shown by arrow **930**, necessary for the insertion of the dedicated actuator **922** into the terminal block. In some embodiments, not shown in Figure 9D, a plurality of motors are used to provide a plurality of movement directions to the wire locking element **904**. In some embodiments, the wire locking element **904** is configured to move up and down, to the sides and forwards-backwards. In some embodiments, a potential advantage of providing such freedom of movement to the locking element **904** is that it allows the device to interact with a plurality of electrical terminal connectors, each having a different location for the access to the wire locking mechanism.

In some embodiments, the wire locking element **904** comprises a torque sensor configured to monitor the torque forces applied by the actuator on the locking mechanism of the electrical terminal connector in the component. In some embodiments, the system comprises a database where specific torque forces related to specific locking mechanisms of electrical terminal connectors are saved. In some embodiments, the system comprises instructions to actuate the actuator according to specific parameters which specifically match the torque requirements of specific locking mechanism of specific electrical terminal connectors and specific wire gauge.

### Exemplary use of wires having end terminal (wire head) ferrules

Referring now to Figures 9E2-9E3, showing schematic representation of ferrules, according to some embodiments of the invention. In some embodiments, the wires used in the automatic wiring system are wires that comprise a built-in ferrule at the distal end (ferrule wire head). Ferrules are a ring or cap **9002**, optionally having a metal distal end **9004**, used to enclose the distal end of the exposed wire in order to facilitate the handling and connection of the distal end of the wire into the electrical terminal connector of the component. In some embodiments, the ferrule is stiff. In some embodiments, the ferrule is stiffer than the wire itself. In some embodiments, the ferrule is between about 2 and about 10 times stiffer than the wire. In some embodiments, ferrules can have different dimensions, as shown for example in Figure 9E2. In some embodiments, the ferrules can have a different form of the metal part **9004** at the distal end, as shown for example in Figure 9E3. In some embodiments, since the ferrule comprises the cap **9002**, which is stiffer than the wire itself, the wiring-end effector module **208** pinches the cap **9002** instead of directly pinching the wire. In some embodiments, a potential advantage of pinching the cap **9002** is that it eases the manipulation of the wire during the insertion into the electrical terminal connector of the component. Since the wire is pliant, it can happen that the wire bends during the insertion causing a deviation in the directionality of the head of the wire that needs to be inserted in the electrical terminal connector. Pinching the cap **9002** potentially helps avoiding this. In some embodiments, ferrules are configured to be completely inserted into the electrical terminal connectors of the components, meaning that the cap **9002** needs to be completely inserted inside the electrical terminal connector of the component in order to be correctly connected. In some embodiments, during the use of wires with ferrules, the method of insertion of the wire into the electrical terminal connector of the component comprises additional steps, as will be further disclosed below. In some embodiments, the additional actions needed to be performed during the insertion of a wire including a ferrule include one or more of: the partial insertion of the ferrule into the electrical terminal connector of the component, release or partial release of the ferrule, moving backwards of the device, re-pinching the wire at a distal location in the wire in relation to the ferrule, finishing the insertion of the wire and ferrule in the electrical terminal connector of the component. In some embodiments, before the release of the ferrule, the system optionally partially closes the locking mechanism of the electrical terminal connector in the component to partially hold the ferrule in place and potentially avoid the ferrule from exiting the electrical terminal connector. In some embodiments, in this case, after re-pinching the wire and before further inserting the wire in the electrical terminal connector, the system releases the locking mechanism of electrical terminal connector to allow further insertion of the wire into the electrical terminal connector. In some embodiments, the wiring-end effector module **300** comprises an additional element configured to hold the wire in place while the extensions are moved to a more distal position on the wire. In some embodiments, the additional element can be a third extension configured to be extended when needed and to hold in place the wire.

In some embodiment the extensions/end effector can insert ferrules of complex shape such as fork type ferrule or ring type ferrule into the connector.

Referring now to Figure 9F, showing a flowchart of an exemplary method of wiring by an exemplary wiring-end effector module **208**, according to some embodiments of the invention. In some embodiments, the elongated extensions grab the wire by applying radial force on the wires **950**. In some embodiments, the force applied on the wire is from about 5N to about 15N, optionally from about 7N to about 20N, optionally from about 8N to about 25N, for example about 8N, about 10N, about 12N. In some embodiments, the resolution of any of the above forces are of about 1N. In some embodiments, the effector module brings the wire close to the connector by applying axial force **952**. In some embodiments, the force applied on the wire is from about 5N to about 15N, optionally from about 7N to about 20N, optionally from about 8N to about 25N, for example about 8N, about 10N, about 12N. In some embodiments, the resolution of any of the above forces are of about 1N. In some embodiments, the wire is then inserted in the hole of the connector **954** of the component. In some embodiments, the system then senses the resistance on the wire by the fact the wire reached the end of the hole in the connector **956**. In some embodiments, the system then secures the wire in the connector (see above ways to secure the wire in the connector) **958** of the component. In some embodiments, the system then pulls back wire by lightly applying contrary directional axial force, while sensing resistance from gabbing sensors, to evaluate firm connection of wire in the connector **960**. In some embodiments, the system then slightly reduces the radial force on the wire while keeping holding the wire **962**. In some embodiments, when the insertion of the wire was the last wire to be connected to a component in the electrical cabinet, then the method ends. In some embodiments, the system then allows the wire (that is still held by the elongated extensions) to slip in the elongated extensions, without releasing the wire, while moving the mechanical arm away from the connector **964**. In some embodiments, the system then continues with the wiring process, as explained therein elsewhere **966**.

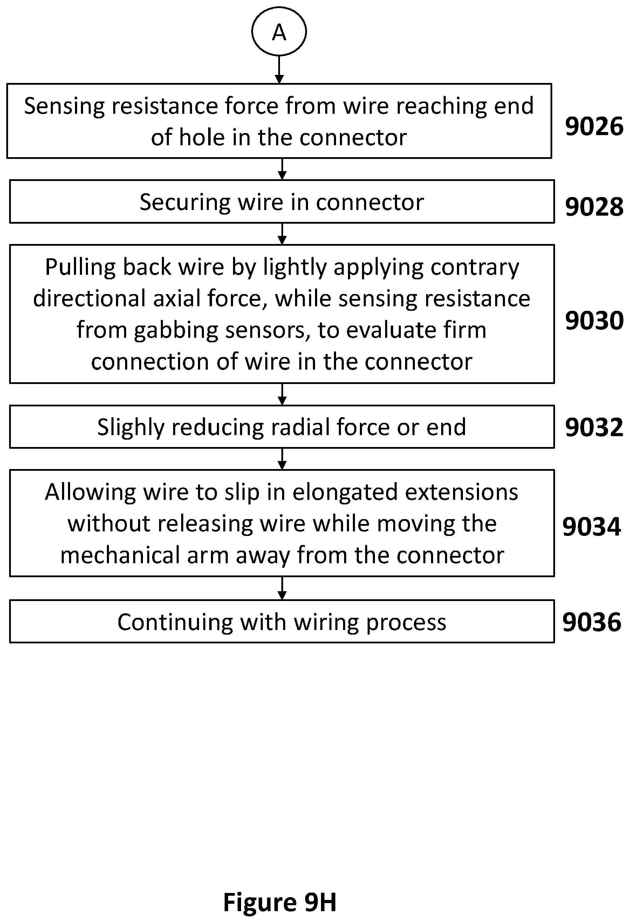

Referring now to Figure 9G, showing a flowchart of an exemplary method of wiring by an exemplary wiring-end effector module when the wire comprises ferrule, according to some embodiments of the invention. In some embodiments, the extensions grab the wire by applying radial force on the ferrule **9006**. In some embodiments, the force applied on the ferrule is from about 3N to about 110N, optionally from about 7N to about 20N, optionally from about 8N to about 25N, for example about 8N, about 10N, about 12N. In some embodiments, the resolution of any of the above forces are of about 0.5N. In some embodiments, the effector module brings the ferrule close to the connector by applying axial force **9008**. In some embodiments, the force applied on the wire is from about 3N to about 15N, optionally from about 7N to about 20N, optionally from about 8N to about 25N, for example about 8N, about 10N, about 12N. In some embodiments, the resolution of any of the above forces are of about 0.25N. In some embodiments, the ferrule is then partially inserted in the hole of the connector **9010** of the component. In some embodiments, optionally, the system partially closes the locking mechanism in the electrical terminal connector to hold the ferrule in place **9012**. In some embodiments, the wire with the ferrule are held in place **9014**. In some embodiments, this is performed by one or more additional elements as disclosed above. In some embodiments, the extensions are actuated to release the ferrule **9016**. In some embodiments, then the device is moved backwards in line with the wire **9018**. In some embodiments, the extensions re-grab the wire on the wire itself **9020**. In some embodiments, optionally, the system opens the previously partially closed locking mechanism of the electrical terminal connector **9022**. In some embodiments, the system then applies axial force to completely inserting the ferrule into the electrical terminal connector **9024**. Flowchart continues in Figure 9H following the letter A. In some embodiments, the system then senses the resistance on the wire by the fact the wire reached the end of the hole in the connector **9026**. In some embodiments, the system then secures the wire in the connector (see above ways to secure the wire in the connector) **9028** of the component. In some embodiments, the system then pulls back wire by lightly applying contrary directional axial force, while sensing resistance from gabbing sensors, to evaluate firm connection of wire in the connector **9030**. In some embodiments, the system then slightly reduces the radial force on the wire while keeping holding the wire **9032**. In some embodiments, when the insertion of the wire was the last wire to be connected to a component in the electrical panel, then the method ends. In some embodiments, the system then allows the wire (that is still held by the elongated extensions) to slip in the elongated extensions, without releasing the wire, while moving the mechanical arm away from the connector **9034**. In some embodiments, the system then continues with the wiring process, as explained therein elsewhere **9036**.

In some embodiments, the parameters sensed by the one or more sensors, either in the extensions, on the gimbal block or anywhere else in the system, for example force, thresholds, motion values relating to the wire and the insertion process are saved in a data base.

### Exemplary management of a wire held by two wiring arm modules

In some embodiments, when a wire is held by two wiring arm modules, the system comprises instructions to hold the wire in a certain way. For example, the wire is held in a certain position relative to the electrical cabinet. Another example a wire is held with a certain tension between the two points on the wire that are being held by the two arms. In some embodiments, a series of instructions are prepared and provided to each of the arm modules during the wiring planning process. In some embodiments, this is performed to allow the robotic arms to act potentially without causing damages to each other, without causing damages to the electrical cabinet, without causing damage to the wire and/or without causing tangling of the wire during the wiring process. In some embodiments, the tension on the wire is directional. For example, while one mechanical arm holds the wire on one end, the other mechanical arm holds the other end while keeping tension and in the direction of the location where it will be allocated in the electrical cabinet, optionally above the duct/DIN.

In some embodiments, the role of holding and tensing the wire is interchangeable between the two mechanical arms. For example, at the beginning of a wiring action, a first mechanical arm holds the wire and does not move, while a second mechanical moves while sliding the wire towards the location where the wire will be allocated. Once the second arm arrives at the destined location on the electrical cabinet it stops, the first arm then releases the wire and goes to where the second mechanical arm is located to continue the wiring process. At this point the second mechanical arm is the one holding the wire while not moving, while the first one will be the one sliding the wire and moving it towards the location in the electrical cabinet where it will be positioned.

In some embodiments, during the wiring process, one of the two arms slides over the wire when laying it on a duct/DIN. For example, as explained above when describing when the wiring-end effector module **208** reduces the radial force on the wire and allows the wire to slip while the mechanical arm moves (see Figures 7B1-7B5 and Figure 9F).

In some embodiments, the distance between the two wiring arms is maintained. In some embodiments, optionally, the distance is adjusted during the placing of a cable in relation to the route of the cable in the duct(s). In some embodiments, optionally, the distance between the arms provide clearance from the components located on the board. In some embodiments, the motion of the arms is slowed down or stopped if the tension is above certain threshold, for example, 15% more than the desired tension and/or the predetermined threshold. In some embodiments, thresholds are set according to the wiring arm capabilities, the type of wire and any combination thereof. In some embodiments, the system monitors the distance between the arms and keeps a certain distance between the wiring arms. In some embodiments, if the distance between the arms exceeds a certain predetermined distance, the motion of the arms is adjusted or stopped.

In some embodiments, when the system senses that a level of tension in the wire and/or a distance between the arms is out of tolerance and/or above or below a predetermined value, for example, ±20% of the predetermined value/tolerance value, the wiring end effector releases the wire to avoid possible damage to the arms and/or the panel/component.

In some embodiments, before placing the wire in a duct, a vision system is used to validate the process.

In some embodiments, operation of two wiring arms for the wiring of a cabinet requires high levels of synchronization and precision in the operation of the arms in a plurality of levels, for example (not an exhaustive list), the operation of one arm with respect to the other, operation of the arms with respect to the cabinet, operation of the arm with respect to the wire, operation of the arms with respect to the wire and the wiring routing plan of the wire in the panel.

In some embodiments, an example of dual arm coordination during wire routing operation comprises that during the routing a first arm will lead the way, meaning the arm that will insert the end of the wire to the relevant terminal connector in the component, while a second arm will follow and support the first arm during the routing process. In some embodiments, a lead wiring arm can become a support arm during the wiring process, and vice versa. In some embodiments, during the wiring process the support arm keeps the wire at certain tension in relation to the lead wire arm by maintaining a certain force on the wire (e.g. 2N, 4N, 8N). In some embodiments, during the wiring process the support arm keeps part of the wire in tension, for example the part of the wire held between the two wiring arms, while other part is left without tension (the wire slacks and/or dangles behind the wiring-end effector). In some embodiments, the length of the slack is from about 10% to about 30% of the total length of the wire being wired. Optionally from about 5% to about 40% of the total length of the wire being wired. Optionally from about 1% to about 50% of the total length of the wire being wired. For example 15%, 20% or 25% of the total length of the wire being wired). In some embodiments, during the wiring process, the slacked wire is held above (when the wiring is performed from above on a panel arranged in an horizontal direction, see for example Figure 15) and/or distanced (when the wiring is performed from the side on a panel arranged in a vertical direction, see for example Figure 3) from the plane where the components of the panel are located. In some embodiments, as the leading arm moves towards the insertion point, leading the wire along the planned path on the panel, the second arm is kept at a certain distance behind the first arm. In some embodiments, as the leading arm moves towards the insertion point, leading the wire along the planned path on the panel, the second arm is kept at a location that is in relation to the next point where the wire needs to be inserted, for example, if a wire needs to be inserted through a hole in a duct, the first arm will insert the end of the wire into the hole, while the second arm will be waiting on the other side of the hole to catch the end of the wire, thereby, additionally, becoming the lead wiring arm. In some embodiments, since sometimes the wire is placed in a duct or go through clips, the location of the second arm is set to be in relation to the duct path and the direction of the wiring. In some embodiments, when the duct is straight, the second arm can be positioned at the distant location of the duct relative to the component being wired. In some embodiments, the second arm is used to facilitate twisting of the wire, for example, in order to facilitate turns of the wire inside the panel. In some embodiments, optionally, when a turn in the duct path is expected, the second arm is positioned above this location to facilitate the twisting of the wire. In some embodiments, while positioning a wire in a location where there is change in the direction of the wire, for example a corner in a duct, excess in wire is purposely left after the point of change of direction of the wire and before positioning the wire. In some embodiments, a potential advantage of doing this before positioning the wire is that it provides enough wire to allow proper positioning of the wire without pulling the wire and/or causing distortions in the wire while being changed direction in the required point in the path.

In some embodiments, the wiring process comprises inserting a first end of a wire into a terminal connector in a component in the cabinet and then taking the cable along a planned path inside the cabinet, towards a second component inside the cabinet where the other end of the wire will be connected to a second terminal connector in the second component. In some embodiments, once the first end of the wire has been inserted into the first component, for example, by the first arm, then the second arm will become the leading arm, taking the wire towards the second component, while the first arm will become the support arm.

In some embodiments, the support arm performs one or more of the following actions: securing the wire in the duct (optionally with other tools, for example a passive finger a stapler, a gluer and/or a latching element; or may be used to place a plastic holding strip ("a bridge") clearing the way to the leading arm; validating routing process using one or more sensors, for example, a camera, a force sensor, a laser line sensor and/or a proximity sensor). In some embodiments, a safe zone is defined, for example, above component level (when the wiring is performed from above on a panel arranged in an horizontal direction, see for example Figure 15) and/or distanced (when the wiring is performed from the side on a panel arranged in a vertical direction, see for example Figure 3) from the plane where the components of the panel are located, and the support arm with the wire are manipulated in the safe zone. In some embodiments, the panel is divided into multiple local safe zones, optionally having different safety heights. In some embodiments, as mentioned above, optionally, the wiring arms comprise wire adhesive elements (e.g. glue, adhesive tape, staples) actuated by one or more dedicated devices, thereby providing means to secure and/or attach the wire to certain location in the panel and/or duct. In some embodiments, as also mentioned herein elsewhere, while the lead arm takes the distal end of the wire to the next point in the panel, the supporting arm slides along the wire to position the wire in place along the path on the panel.

In some embodiment where multiple wires are placed in same duct, the position of the manipulated wire that is being held, is in relation to the already placed wire, for example, if the center of the duct is occupied by other wires, the support arm will place and/or will nudge the wire being currently placed to one side of the duct. In some embodiments, the software takes into account the load on the ducts and can, optionally, add to the wire length to compensate for added distance required due to wire loads in the ducts, for example adding 1%, 2% or 5% to wire length.

### Exemplary optimization features for automated wiring processes

In some embodiments, the system comprises one or more features configured to optimize the automated wiring process performed by an exemplary horizontal/vertical automated wiring system.

### Cartridge for lose wire during wiring process

In some embodiments, as explained above, while the lead wiring arm is positioning the wire along the planned path in the cabinet, the support wiring arm provides support to the actions performed by the lead wiring arm. In some embodiments, one of those support actions is to hold the rest of the wire that the lead wiring arm is "dragging" while moving the end of the wire through the wiring path. In some embodiments, the wiring arms optionally comprise a dedicated cartridge where lose wire is rolled and/or kept, when a specific wire arm acts as support wiring arm. In some embodiments, since the roles of lead and support might change during the wiring process, both arm optionally comprise the dedicated cartridge. In some embodiments, the wire that is kept in the dedicated cartridge is released when necessary during the wiring process, for example, when a motion of an arm requires more lose wire, while considering ducts and/or obstacles in wiring path. In some embodiments, a potential advantage of having the dedicated cartridge is that long wires are kept contained during the wiring process thereby potentially avoiding the lose wire to cause damage or get entangled during the wiring process.

### Exemplary clearing of obstacles by the support wiring arm

In some embodiments, if and when during a wiring process, there is a possibility that the wire, being positioned in the cabinet by the lead wiring arm, might get entangled and/or could not be correctly positioned in the destined place along the path, the system is configured to activate the support wiring arm to perform actions to solve these problems. For example, the support wiring arm will move the obstacle (for example other wires already positioned in the cabinet) away from the wire being positioned, optionally using a dedicated tool that allows interaction with other wires without damaging them (for example a tweezer, an elongated rod). In some embodiments, optionally, during the clearing of obstructions, the support wiring arm does not hold the wire being positioned. In some embodiments, optionally, the wire is routed with the two arms around an obstacle. In some embodiments, alternatively, a new path is calculated to provide a detour around the obstacle.

### Use of one wiring arm when possible

In some embodiments, the system is not obligated to use two wiring arms for the wiring process. In some embodiments, for example when wiring short wires (e.g. having 1cm, 2cm, 5cm length), the system is configured to allow one wiring arm to do the whole wiring process, leaving the second arm to perform other tasks related to the overall wiring process of the cabinet. In some embodiments, optionally for a short wire, the wiring arm secures one end of the wire in the object/component and then slides along the wire (while possibly "feeling" the sliding motion) to the other end and then insert it in the required position. In some embodiments, optionally, after the 1^{st} insertion, the arm releases the wire and re-grabs it at the other end optionally with aid of sensors for example a vision camera.

### Use of grip and slip for wiring process

In some embodiments, the system utilizes its 'grip and slip' capabilities for the allocation of the wires on the planned path. For example, wiring arm can hold the wire on top of the surface where it is needed to be positioned, and slowly moving along the wire (the 'slip' component of the 'grip and slip' capabilities) while positioning the wire in the destined path.

### Exemplary actuation of circuit breakers

In some embodiments, the wire end effectors are configured to actuate, for example, moving upwards/downwards and/or pushing, circuit breakers in the panel. In some embodiments, the actuation is perform using the extensions. In some embodiments, actuation is performed using a dedicated actuation device. In some embodiments upon switching on/off a component certain tests are performed, for example, continuity test, load test, logical test (of circuit logic).

### Use of complex wires

In some embodiments, the system is configured to manipulate not only single wire wires, but also wires comprising one or more splits in the wire, providing a multi-wire wire and/or harnesses. In some embodiments, for example, wires with a T-like harness having three ends, the supporting arm holds the location on the wire where the split in the wire is located while the leading arm inserts one end of the wire to a component and then a second end of the wire to a second component.

### Example using the system to wire harness in a cabinet

In some embodiments, the extensions of the end-effector are configured to hold a wire head that needs to be inserted into a component. For example, a network cable comprises a dedicated wire head (also known as RJ45 connector). In this example, the extensions of the end-effector are configured to hold the RJ45 connector of a network cable and connect it to a dedicated component in the cabinet. In some embodiments, the system comprises information about the sensory feedback that will be recorded when connecting these types of wire heads, for example, force, torque and visual feedback. In some embodiments, sensory feedbacks are used to validate proper insertion of the wire head in place. In some embodiments, after insertion of the wire head in place, the locking actuator is used to secure the wire head in place, for example by tightening the screws of the connector in the component. In some embodiments, a dual push action is used (i.e. pushing releasing and re-grabbing) to insert the wire head.

### Optional division of tasks in a timeline

In some embodiments, the system is configured to perform a part of a task, stop, perform a different task, and then pick up the previous task and finish it. For example, connecting one end of a wire to one connector and positioning the wire along the planned path, release the wire, perform different tasks and then return to the wire previously left and continue with the positioning and/or connection to a connector. In some embodiments, re-grabbing a wire is done using vision system and/or by going to a known position (a component a clip a corner) and slipping along the wire to its end.

### Exemplary provision of multiple degrees of freedom to the wire end effectors

In some embodiments, the wire end effectors are provided with multiple degrees of freedom (DOF) to allow overcoming of obstacles and/or wire overcrowding. In some embodiments, the wire end effectors or the manipulating arms are provided with 6 degrees of freedom: three rotations and three translations about each perpendicular axis. In some embodiments, the wire end effectors are provided with 7 or more degrees of freedom. In some embodiments, a potential advantage of providing more than 6 degrees of freedom is that, while it may cause redundancy (or overredundancy) problems in the software, it may also potentially allow the solving of wire manipulation to overcome obstacles and/or when positioning a wire during a wire overcrowding situation.

### Smart identification marker on components

In some embodiments, components to be used in an electrical cabinet will comprise a smart identification marker on top of it so it can be read by the automated wiring system during the wiring process. For example, markers along the ducts, which will provide reference for the wiring arms regarding their location along the duct. For example, a specific connector, called connector X for this example, is located at specific coordinates in the electrical cabinet and it comprises a smart identification marker. In some embodiments, the mechanical arm will comprise a reader or a camera or a sensor for the smart identification marker, which will be used to corroborate the correct arrival at the correct location of the mechanical arm.

### Location markers on the electrical cabinet

In some embodiments, the electrical cabinet will be provided with dedicated location markers, which will be added to the information stored in the designing console **102** to be used and identified by the mechanical arms, using for example a camera or a reader, during the wiring process.

### Use of self-locking components/connectors

In some embodiments, the electrical panel is provided with components which do not comprise connectors comprising screws for locking the wires in place, for example by using self-locking mechanisms.

### Exemplary smart ducts/DINs

In some embodiments, the electrical panel is provided with smart ducts, alternatively with smart DIN rail (or both), configured to assist in the automatic wiring process. For example, the ducts may comprise one or more clips and/or holders and/or reversible attachable connectors for the wire, which hold the wire that was placed in them once they are placed. In some embodiments, a potential advantage of this is that it allows already placed wires to not interfere with the rest of the wiring process. In some embodiments, the ducts/DINs comprise one or more location markers, which are also stored in the designing console **102** to be used and identified by the mechanical arms. In some embodiments, the smart ducts/DINs are configured to receive smart wires as explained below. In some embodiments, the electrical panel is configured to allow positioning wires and then positioning an inverted duct on top of the positioned wires so the wires will be covered. In some embodiments, the ducts/DINs are positioned at an angle that helps with the automated wiring by the mechanical arms. For example are positioned at an angle of from about 1 degree to about 15 degrees in relation to the electrical cabinet. In some embodiments, the ducts/DINs comprise tightening strips configured to tighten the wires to the ducts/DINs once in place. In some embodiments, the ducts have side opening in order to provide an easy access for the robot to locate and/or to pass the wire through the side. In some embodiments, the ducts may have marking that will potentially ease the duct alignment/location relative to the rest of the panel, for example it can include scale/color, etc. In some embodiments, the ducts comprise one or more attachments for allowing the wire assembly robot to place them before/during or after placement of the wires. For example, the ducts may have adhesive at the bottom to secure the duct to the panel once placed.

In some embodiment the DIN rail has marking at one or two ends to allow accurate location and identification of a position in the rail relative to the panel. In some embodiments, optionally, at the end of each array of components mounted on the DIN rail, a marking component is added to identify the end and/or a beginning location of the components placed on the DIN rail.

In some embodiments, wires are positioned in a duct-less panel, and, after finishing a part or all of the positioning of the wire, an inverse duct (meaning having an opening on the bottom and it is covered on the top) is positioned on top of the wires, thereby closing the wires in a closed duct.

### Exemplary smart wires

In some embodiments, the electrical panel is wired with smart wires configured to assist in the automatic wiring process. For example, the wires may comprise one or more clips and/or holders and/or reversible attachable connectors for the wire, which hold the wire in place once installed in the duct/DIN. In some embodiments, a potential advantage of this is that it allows already placed wires to not interfere with the rest of the wiring process. In some embodiments, the wires comprise one or more location markers, which are also stored in the designing console **102** to be used and identified by the mechanical arms during the wiring process. In some embodiments, the wires may comprise a connecting material (for example glue) and once the wires are positioned the connecting material will keep the wire in place optionally the adhesive on the wire can be cured after placement. In some embodiments, the wires comprise a roughed surface to help the elongated member with the grabbing of the wires. In some embodiments, the wires comprise different cross sections that support better arrangement of the wires in the duct, for example a square cross section.

### Exemplary ductless electrical cabinet

In some embodiments, the electrical cabinet may not comprise ducts at all, for example by providing smart wires that can be attached to one another, and the wires are those who keep the wires in place.

### Exemplary method of wiring by wiring arms module 206

Referring now to Figure 10, showing a flowchart of an exemplary method of wiring by the wiring arms module **206**, according to some embodiments of the invention. In some embodiments, the system receives the information about the wire that is needed to be used, the length of the wire and the type of wire end required **1002**. In some embodiments, the wire preparation module prepares the wire, as disclosed herein **1004**. In some embodiments, the first end of the wire is picked up by the wiring arms module **1006**. In some embodiments, the first end of the wire is manipulated to the location in the electrical cabinet **1008**. In some embodiments, the wiring arms module **206** inserts the first end of the wire into the terminal connector of a first component, locks the wire in the terminal block and performs a validation **1010**, for example by slightly pulling the wire back and "feeling" slippage of the elongated extensions **910a-b** rather than increased force. In some embodiments, the second end of the wire is picked up by the wiring arms module **1012**. In some embodiments, the second end of the wire is manipulated to the location in the electrical cabinet **1014**. In some embodiments, manipulation of the second end of the wire includes routing the wire from the location where the first end of the wire was inserted through wire channels/tracks until the second end of the wire reaches its location. In some embodiments, the two wire arm modules work in cooperation in the insertion of the wire through the channels/tracks, similar to the work that a human would do while performing the same work. For example, when inserting the wire in an angled channel/track, one arm holds the wire in a certain location while the other arm places the wire inside/through the channel/track, or for example, when needing to pass the wire through an orifice, one arm holds the wire on one side of the orifice, passes the end of the wire through the orifice and the other arm picks the end of the wire from the other side of the orifice. It should be understood that the examples above are just examples and should not limit the invention in any way.

In some embodiments, the wiring arms module **206** inserts the second end of the wire into the connector of a second component, locks the wire in the terminal block and performs a validation **1016**. In some embodiments, the system then assesses if there are any other wires needed for that job **1018**. In some embodiments, if the answer is "YES", then the method starts for the beginning. In some embodiments, if the answer is "NO", then the system generates a report and ends the job **1020**.

### Exemplary data flow and operation

Referring now to Figure 11, showing a schematic representation of an exemplary data flow and operation of an automated wiring system, according to some embodiments of the invention. In some embodiments, the user begins by virtually planning an electrical cabinet **1102**. In some embodiments, the user runs a simulation in a dedicated software **1104**. In some embodiments, the planning is optionally optimized in view of the results of the simulation **1106**. In some embodiments, further simulations are run until the best plan is achieved. In some embodiments, before continuing the system performs a final assessment to see if the planning stage is over **1108**. In some embodiments, if the answer is "NO", then the system returns to the planning stage. In some embodiments, if the answer is "YES", then the system generates an electrical schematic plan adapted also to be shared in other platforms, the system generates a mechanical drawing of the electrical panel adapted also to be shared in other platforms and the system generates a bill of materials (BOM) for the assembly of the electrical cabinet **1110**.

In some embodiments, at this point, the system generates a sequence of routing of wires based on the electrical schematic and the mechanical drawing **1111**. In some embodiments, as explained herein elsewhere, the generation of a sequence of routing of wires comprises the virtual generation of a series of possible sequences of inserting the wires in the electrical cabinet, and evaluating possible problems that could occur during the actual wiring of the electrical cabinet. In some embodiments, optionally, the system performs simulations to optimize the sequence of routing the wires, optionally according to determined parameters.

In some embodiments, the abovementioned actions comprises a continuous exchange of data between the computer of the user planning the electrical and the server **1112**. In some embodiments, once all is ready for assembly, the electrical cabinet is assembled in the automated electrical wiring unit/system **106** according to the final version of the plan **1114**. In some embodiments, during the assembly, the automated electrical wiring unit/system **106** is in communication with the server for continuing monitoring of performance **1116**.

### Exemplary lighting wiring fixture

In some embodiments, the automated electrical wiring system is used for the wiring of lighting units. In the following paragraphs, an exemplary use of the automated wiring system will be disclosed. It should be understood that the following is just an example of use of the automated wiring system brought in order to allow a person having skills in the art to understand the invention and should not be limiting in any way. Referring now to Figure 12 showing a schematic representation of an automated electrical wiring for lightning units **1200**, according to some embodiments of the invention. In some embodiments, the automated electrical wiring for lightning units **1200** comprises a base **1202** on which the different parts of the automated electrical wiring for lightning units **1200** are mounted. In some embodiments, the automated electrical wiring for lightning units **1200** comprises at least one robotic arm **1204** comprising a wire end-effector **1206**. In some embodiments, the automated electrical wiring for lightning units **1200** optionally comprises an additional robotic arm configured to assist the main robotic arm **1208**. In some embodiments, the automated electrical wiring for lightning units **1200** optionally comprises a depth camera **1210** configured to monitor the wiring actions of the system. In Figure 12 it is also shown an exemplary lighting panel **1212** in the location where the wiring process is performed.

Referring now to Figures 13A-B, showing schematic representations of exemplary wire end-effector **1206** of the automated electrical wiring for lightning units **1200**, according to some embodiments of the invention. In some embodiments, the automated electrical wiring system is used, for example, for lightning units/fixtures (see below). In some embodiments, the wire end-effector **1206** comprises a mechanical wire feeder **1302** comprising a dedicated motor **1304** configured to feed the necessary wire **1306** into the gripper **1308**. In some embodiments, as mentioned above, the gripper **1308** comprises two (optionally finger-like) extensions **1310a-b** configured to pinch and hold the wire **1306**. In some embodiments, each extension is connected to a force providing mechanism **1312a-b**, configured to perform the movement of the two extensions **1310a-b** that actuates the pinching/holding action. In some embodiments, a dedicated motor **1314** is connected to the force providing mechanism **1312a-b**. In some embodiments, optionally, the wire end-effector **1206** comprises an end-wire cutter **1316** configured to take out the isolation around the wire and expose the core of the wire. In some embodiments, the wire end-effector **1206** optionally comprises a vacuum system (not shown) configured to pick up the waste from the end-wire cutter **1316** and transport it into a waste container **1318**.

Referring now to Figure 14, showing a schematic close view of the gripper **1308** and the extensions **1310a-b**, according to some embodiments of the invention. Same part numbers are used. In some embodiments, the gripper **1308** comprises one or more sensors **1320** on the extensions **1310a-b** configured to monitor the force applied by the gripper **1308**. In some embodiments, as explained above, the sensors are alternatively or additionally in the gimbal block(s) **370** that are holding the extensions. In some embodiments, as schematically shown in Figure 14, the gripper **1308** applies and monitors forces in three main directions (marked as *Fᵢₙ₁, Fᵢₙ₂* and *Fᵢₙ₃,*). In some embodiments, the forces are used for the insertion of the wire **1306** into the wire terminal **1322**, as schematically shown on the left side of Figure 14. In some embodiments, the forces (*Fᵢₙ₁, Fᵢₙ₂* and *Fᵢₙ₃,*) are from about 5N to about 15N, optionally from about 7N to about 20N, optionally from about 8N to about 25N, for example about 8N, about 10N, about 12N. In some embodiments, the resolution of any of the above forces are of about 1N.

### Exemplary horizontal automated wiring system with dedicated wire preparation modules

In some embodiments, the automated wiring system is configured to be mounted on a horizontal platform. In the automated wiring system shown in Figures 1A-B, 3 and 4, the automated wiring system is mounted on a vertical platform, which allows the connection of wires on a cabinet that is standing, together with a wire preparation module near it to provide the necessary wires, as disclosed herein. In the automated wiring system shown in Figure 12, the automated wiring system is mounted on a horizontal platform, which allows the connection of wires on an object that is on the platform, with a wire feeder incorporated in the wire-end effector **1206**.

In the following paragraphs, variations of horizontal automated wiring system with dedicated wire preparation modules will be disclosed.

Referring now to Figure 15, showing a schematic representation of an exemplary horizontal automated wiring system with a dedicated wire preparation module, according to some embodiments of the invention. In some embodiments, the system is mounted on a horizontal platform **1502**, and on top of it, all necessary instruments are located. As mentioned above, in some embodiments the system comprises one or more wiring arms modules **1504** (in Figure 15, two are shown) optionally both comprising wiring-end effector modules **1506** and a wire preparation module **1508**, similar to what was disclosed above, configure to prepare ready to be connected wires **1510**, which will be used in the wiring of a panel **1512** (for example). In some embodiments, similar to the system disclosed in Figure 12, this system optionally comprises a depth camera **1514** configured to monitor the wiring actions of the system. In some embodiments, the wiring methods are the same as disclosed herein elsewhere.

Referring now to Figure 16, showing a schematic representation of another exemplary horizontal automated wiring system with a dedicated wire preparation module, according to some embodiments of the invention. In some embodiments, the system comprises two separate systems allocated one near the other. In some embodiments, one of the systems is a wire preparation system **1602**, comprising two fully automated mechanical arms **1604**, configured to prepare wires **1606** to be installed in devices **1608**. In some embodiments, the other system is an automated wiring system comprising another two automated mechanical arms **1610**. In some embodiments, the wire preparation system **1602** can prepare in advance a plurality of wires **1612**, which are left near the automated wiring system **1610**. In some embodiments, similar to the other systems, this system optionally comprises a depth camera **1614** configured to monitor the wiring actions of the system. In some embodiments, the wiring methods are the same as disclosed herein elsewhere.

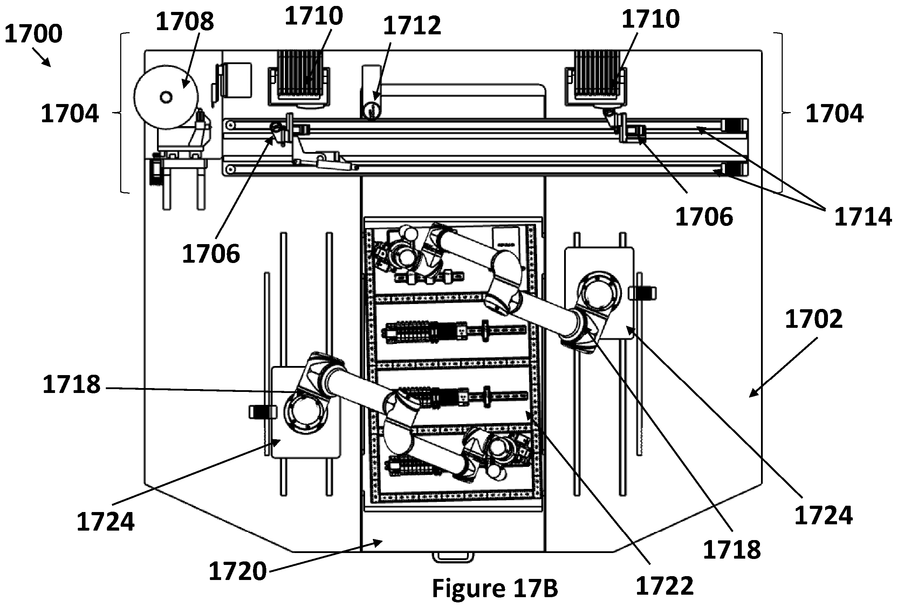

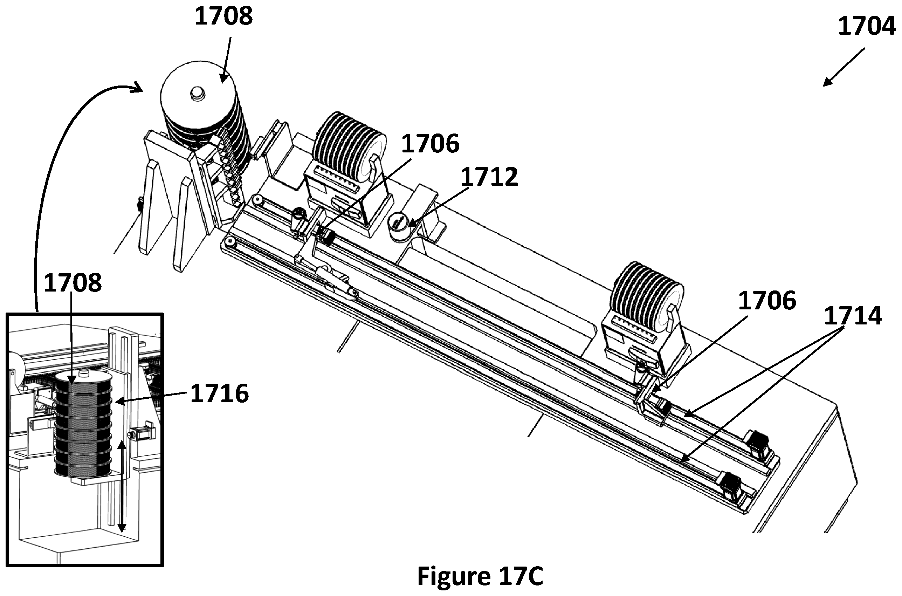

Referring now to Figure 17A, showing an isometric view of a schematic representation of another exemplary horizontal automated wiring system **1700** with a dedicated wire preparation module, according to some embodiments of the invention. In some embodiments, the system comprises a base **1702**, on which all the components of the automated wiring system are installed, as will be further explained below. In some embodiments, the base **1702** comprises a dedicated slot for the allocation of an electrical cabinet **1722**, on which the wiring will be performed. In some embodiments, the electrical cabinet is positioned horizontally, leaving accessible the DINs and connectors for the wiring process, as shown for example in the upper view of the exemplary horizontal automated wiring system **1700** shown in Figure 17B. In some embodiments, the exemplary horizontal automated wiring system **1700** comprises a wire preparation system **1704**, for example as also shown in Figure 17C, comprising two fully automated mechanical arms **1706** mounted on two horizontal rails **1714**, configured to prepare wires **1708** to be installed in electrical cabinet **1722**. In some embodiments, similarly to what was disclosed in Figures 4, 5A-B, the wire preparation system **1704** comprises at least one crimper **1710**, a cutter (not shown) and an optional laser engraver **1712**, for marking wires. In some embodiments, a plurality of wires are kept in a device **1716** configured to move vertically to allow better access of the relevant wire to the mechanical arm **1706**.

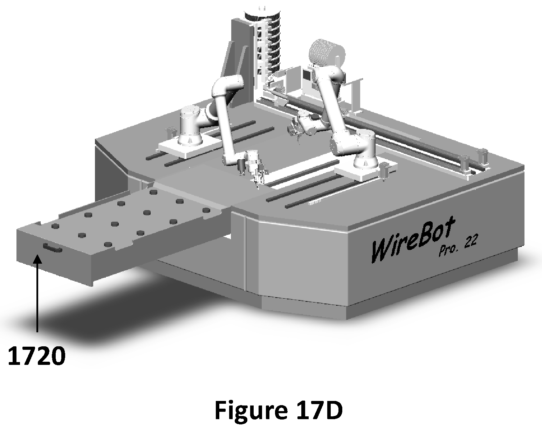

In some embodiments, the exemplary horizontal automated wiring system **1700** comprises another two automated mechanical arms **1718**, similar to the mechanical arms as disclosed above. In some embodiments, the wire preparation system **1704** can optionally prepare in advance a plurality of wires, which are left near the two automated mechanical arms **1718**. In some embodiments, similar to the other systems, this system optionally comprises a depth camera configured to monitor the wiring actions of the system. In some embodiments, the wiring methods are the same as disclosed herein elsewhere. In some embodiments, each of the two automated mechanical arms **1718** are mounted on a base **1724** that is configured to move horizontally on the base **1702**. In some embodiments, the exemplary horizontal automated wiring system **1700** comprises a drawer like panel handling module **1720** that is moved to insert and/or remove the electrical cabinet **1722** before and/or after has been wired, as shown for example in Figure 17D.

### Exemplary optional mounting of electrical elements in electrical cabinets

In some embodiments, in addition to the automated wiring system, the system of the present invention can be configured to mount electrical components into the electrical cabinet prior to the automated wiring process. In some embodiments, a potential advantage of doing this is that all the preparations of the electrical cabinet are performed and monitored at the same location.

### Exemplary one arm system

In some embodiments, the system comprises one mechanical arm configured to perform all automated action of the wiring process. For example, pre-made wires ready to be wired are held on one side by the mechanical arm, while the other side is revolved into a winch and the wire is released as needed. In some embodiments, the winch with the wire is provided to the mechanical arm directly from the wire preparation module.

Various embodiments and aspects of the present invention as delineated hereinabove and as claimed in the claims section below find experimental support in the following Exemplary Embodiments.

### EXEMPLARY EMBODIMENTS

Reference is now made to the following Exemplary Embodiments, which together with the above descriptions illustrate some embodiments of the invention in a non-limiting fashion.

Referring now to Figures 18A-B, showing schematic illustrations of a wiring process by two automated mechanical arms, according to some embodiments of the invention.

Figure 18A shows a schematic representation of two automated mechanical arms **1802/1804**. For the following explanations one automated mechanical arm will be called arm one **1802** and another will be called arm two **1804**. Also shown in Figure 18A is a schematic representation of an electrical panel **1806** in need to be wired. Figure 18B shows a schematic representation of the electrical panel **1806** in more detail. The exemplary electrical panel **1806** comprises 5 ducts **1808-1/5**. The exemplary electrical panel further comprises a plurality of components, and for the present example, Component A and Component B require a wire to connect between them.

On Figure 18B, are also marked reference points, circled 1 through 8 for the explanations that will follow.

As stated above, in the following example a wire needs to be placed between Component A and Component B. For the matters of this example, it was decided that the chosen path from Component A to Component B will be by extending the wire from reference point 1, which is the wire connected to Component A, to reference point 2, into duct **1808-3** following reference point 3. Then the wire will need to be turned to be then extended inside duct **1808-3** towards reference point 4 and into duct **1808-5**. Then the wire will need to make a turn into duct **1808-5** towards reference point 5. Then the wire will need to make a turn into duct **1808-4** towards reference point 6. Then the wire will exit duct **1808-4** at reference point 7, and will be inserted into Component B following reference point 8.

The following table summarizes the actions of arm one **1802** and arm two **1804** during the placement of the wire from reference point 1 to reference point 8.

| From reference point | To reference point | Status of Arm 1 **1802** | Status of Arm 2 **1804** |
|---|---|---|---|
| 1 | | Insertion of wire into connector of Component A | Hovers over panel while keeping the wire tense |
| 2 | 3 | 1. Arm goes above duct **1808-3** close to the zone where the side opening of the duct is located. | Updating location to keep the wire tense |
| | | 2. Identification of the side opening by visual sensors or tactile sensors. | |
| | | 3. insertion of the wire inside duct **1808-3** | |
| 3 | | 90 degrees rotation of the wire | Movement along duct **1808-3** where the wire will be placed |
| 3 | 4 | Caging hold the wire and placement of the wire along duct **1808-3** | Continuous movement following the placement of the wire while holding it tense |
| 4 | | 90 degrees rotation of the wire | Movement along duct **1808-5** where the wire will be placed |
| 4 | 5 | Caging hold the wire and placement of the wire along duct **1808-5** | Continuous movement following the placement of the wire while holding it tense |
| 5 | | 90 degrees rotation of the wire | Movement along duct **1808-4** where the wire will be placed |
| 5 | 6 | Caging hold the wire and placement of the wire along duct **1808-4** | Continuous movement following the placement of the wire while holding it tense |
| 6 | | 90 degrees rotation of the wire | |
| 6 | 7 | 1. Arm goes above duct **1808-4** close to the zone where the side opening of the duct is located. | Updating location to keep the wire tense |
| | | 2. Identification of the side opening by visual sensors or tactile sensors. | |
| | | 3. insertion of the wire into side opening therefore exiting duct **1808-4** | |
| 8 | | Insertion of wire into connector of Component B | |

Referring now to Figure 19, showing a graph describing the exemplary phases of the insertion of a wire into an electrical terminal connector of a component as identified by the sensors in the gripper, according to some embodiments of the invention. In some embodiments, the system is configured to identify the different phases of the insertion of the wire into the electrical terminal connector of a component, as further disclosed above. The graph in Figure 19 shows the force sensed by the sensors on the finger-like extensions **910a-b** in the gripper **1308** in relation to the held wire. In some embodiments, the phases are:
Phase A: movement forward towards the electrical terminal connector of a component. In some embodiments, at this phase, the wire is held by the gripper **1308** and the gripper **1308** is moving forward towards the electrical terminal connector of the component. In some embodiments, at the beginning the sensed force is the same as the wire has not met any obstruction. In some embodiments, at some point, the wire meets the electrical terminal connector of the component, and the sensors begin to sense an increase in the sensed force. Once reached a certain peak, the system will move to the next phase. In some embodiments, the peak may depend and optionally set based on type of wire and/or the type of electrical terminal connector. In some embodiments, the relation between the type of wire, the type of connector of the component and the "sensed" forces is learned by the system and stored in a dedicated database. In some embodiments, an AI algorithm is used to generate these peak values based on learned data.
Phase B: movement backwards from the electrical terminal connector of the component. In some embodiments, once a certain peak has been reached, the gripper **1308** will begin moving backwards while still holding the wire but without actually pulling the wire with it. In some embodiments, as shown in the graph, the sensed forces decrease drastically, as the gripper loosens the grip.
Phase C: movement backwards from the electrical terminal connector of the component while pulling the wire. In some embodiments, in order to assess correct connection between the wire and the electrical terminal connector of the component, the gripper gently holds the wire while continuing moving backwards from the electrical terminal connector of the component. In some embodiments, at this point, two possible things can happen: 1. the wire is correctly connected and will not move causing the gripper to slip over the connected wire; or 2. the wire is not connected correctly and will be pulled out the electrical terminal connector. In some embodiments, as mentioned above, the values are learned and/or adjusted after each attempt.

In some embodiments, different types of electrical terminal connectors and different types of wires will be characterized with different forces, which will be characterized by different forces sensed by the gripper. In some embodiments, the system comprises a database in which the different combinations of different types of electrical terminal connectors and different types of wires are kept, and according to the input provided by the user, the system will actuate the gripper accordingly.

Referring now to Figures 20A-C, showing three different examples of sensed forces by the gripper in three different scenarios, according to some embodiments of the invention. Figure 20A shows an example of what the sensors sense during the movement backwards of the gripper and the wire did not connect at all with the electrical terminal connector of the component. In this case, there is no increase of the sensed force since the wire does not resist the pulling of the gripper.

Figure 20B shows an example of what the sensors sense during the movement backwards of the gripper and the wire did not connect correctly with the electrical terminal connector of the component. In this case, at the beginning, the gripper begins to move backwards until the wire resists the pulling, which is translated to an increase in the sensed force. At some point, because the wire is not properly connected, it will detach from the electrical terminal connector of the component, which is evidenced by the sudden decrease in the sensed force, and then return to the same levels as in the beginning.

Figure 20C shows an example of what the sensors sense during the movement backwards of the gripper and the wire did connect correctly with the electrical terminal connector of the component. In this case, at the beginning, the gripper begins to move backwards until the wire resists the pulling, which is translated to an increase in the sensed force. At some point, because the wire is properly connected, the gripper will begin slipping over the wire, which is evidenced by the reduction of the sensed force on the gripper at the end of the graph.

Referring now to Figure 21, showing a plurality of test experiments for the characterization of exemplary scenarios, according to some embodiments of the invention. As previously disclosed, at the beginning there is movement of the gripper without resistance from the wire, therefore the input from the force sensor stays stable. Then, once the wire enters the electrical terminal connector of the component, there is spike in the input from the sensors due to the resistance between the wire and the connector. Then, the device begins to pull the wire backwards in order to assess the connection between the wire and the electrical terminal connector of the component. This part is characterized by a sudden decrease in the input received from the sensor, as seen in Figure 21. Then, according to the outcome of the connection between the wire and the electrical terminal connector, different inputs are received from the sensor. In Test 1, the wire missed the connector, as can be seen by the unchanged graph. In Test 2, the wire disconnected from the connector during the pulling backwards of the wire. In test 3, the wire connected perfectly to the connector, and the gripper slipped over the wire during the backwards movement. In Test 4 the wire disconnected from the connector during the pulling backwards of the wire. The abovementioned graphs are exemplary experiments provided to allow a person having skills in the art to understand the invention and should not be limiting in any way.

As used herein with reference to quantity or value, the term "about" means "within ± 20 % of".

The terms "comprises", "comprising", "includes", "including", "has", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular forms "a", "an" and "the" include plural references unless the context clearly dictates otherwise. For example, the term "a compound" or "at least one compound" may include a plurality of compounds, including mixtures thereof.

Throughout this application, embodiments of this invention may be presented with reference to a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as "from 1 to 6" should be considered to have specifically disclosed subranges such as "from 1 to 3", "from 1 to 4", "from 1 to 5", "from 2 to 4", "from 2 to 6", "from 3 to 6", etc.; as well as individual numbers within that range, for example, 1, 2, 3, 4, 5, and 6. This applies regardless of the breadth of the range.

Whenever a numerical range is indicated herein (for example "10-15", "10 to 15", or any pair of numbers linked by these another such range indication), it is meant to include any number (fractional or integral) within the indicated range limits, including the range limits, unless the context clearly dictates otherwise. The phrases "range/ranging/ranges between" a first indicate number and a second indicate number and "range/ranging/ranges from" a first indicate number "to", "up to", "until" or "through" (or another such range-indicating term) a second indicate number are used herein interchangeably and are meant to include the first and second indicated numbers and all the fractional and integral numbers therebetween.

Unless otherwise indicated, numbers used herein and any number ranges based thereon are approximations within the accuracy of reasonable measurement and rounding errors as understood by persons skilled in the art.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. A method of automatic connecting at least one wire (**920, 1306**) to at least one connector (**1322**), comprising:
a. automatically grabbing a distal end of at least one wire (**920, 1306**) by means of an automatic system (**106**) for electrical wiring comprising at least one wire holder (**208**);
b. automatically moving said at least one wire holder (**208**) to bring said distal end of said at least one wire (**920, 1306**) close to said at least one connector (**1322**);
c. automatically inserting said distal end of said at least one wire (**920, 1306**) in said at least one connector (**1322**);
d. automatically assessing if said at least one wire (**920, 1306**) is correctly connected to said at least one connector (**1322**);
**characterized in that** said automatically assessing comprises assessing resistance to pulling of said wire from said connector (**1322**) as sensed by at least one sensor in said automatic system (**106**).

2. The method according to claim 1, further comprising sensing at least one parameter of said at least one wire in relation to said at least one connector during said automatically inserting and said automatically assessing.

3. The method according to claim 2, wherein said at least one parameter is one or more of a state of said at least one wire, a deformation of said at least one wire, a position of said at least one wire, a force applied on said at least one wire, a torque applied on said at least one wire.

4. The method according to claim 1, wherein said inserting is performed by moving said at least one wire holder.

5. The method according to claim 1, wherein said at least one wire is a harness wire comprising a plurality of distal ends.

6. The method according to claim 1, wherein said inserting is performed by moving a robotic arm on which said at least one wire holder is mounted.

7. The method according to claim 1, wherein said sensing comprises sensing a force applied to said at least one wire when coming in contact with said at least one connector.

8. The method according to claim 1, further comprising automatically locking said at least one wire in said at least one connector by actuating at least one locking mechanism.

9. The method according to claim 1, wherein said automatic system (**106**) for electrical wiring comprises two wiring arm modules configured to collaborate with each other in performing said connecting of said at least one wire.

10. The method according to claim 9, wherein during said connecting said two wiring arm modules are distanced between each other so as to provide tension on said at least one wire.

11. The method according to claim 10, wherein parts of said wire that are not held between said two wiring arm modules are not provided with tension.

12. The method according to claim 10, wherein during said connecting one of said two wiring arm modules holds firmly said wire while the other wiring arm module slides on the wire to a desired location.

13. The method according to claim 11, wherein said wire that is held without tension is from about 1% to about 50% of the total length of said wire.

14. The method according to claim 9, further comprising monitoring a motion of each of said two wiring arm modules.

15. The method according to claim 14, wherein said motion is one or more of: motion of one of said two wiring arm modules with respect to the other, motion of each said two wiring arm modules with respect to said connector, motion of each said two wiring arm modules with respect to said object, distance between said two wiring arm modules and tension of said wire being held between said two wiring arm modules.
